# EUROPEAN PATENT APPLICATION

(11) **EP 4 608 007 A1**
(43) Date of publication of application: **27.08.2025**
(21) Application number: 23884859.2
(22) Date of filing: 30.10.2023
(51) Int. Cl.: H04W 36/00

(54) **COMMUNICATION METHOD, COMMUNICATION APPARATUS, COMPUTER-READABLE STORAGE MEDIUM, AND COMPUTER PROGRAM PRODUCT**

(30) Priority: 03.11.2022 CN 202211372992
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN)
(74) Representative: Goddar, Heinz J.
(86) International application number: PCT/CN2023/127815
(87) International publication number: WO 2024/093929

(57) **Abstract**

Embodiments of this disclosure provide a communication method, a communication apparatus, a storage medium, and a program product. The method may include: successfully performing a handover from a first cell of a first access network device based on a first RAT to a second cell of a second access network device based on a second RAT; generating a first report for the handover, where the first report includes information related to the handover, and the first RAT is different from the second RAT; and sending the first report to a third access network device. In embodiments of this disclosure, reported information and a corresponding recording manner may be added, to support information recording of a handover between different cells based on RATs. Embodiments of this disclosure further provide a plurality of manners of configuring a trigger condition for generating a handover-related report, and a manner of sensing a related handover report by a network side.

## Description

### TECHNICAL FIELD

This application relates to the communication field, and more specifically, to a communication method, a communication apparatus, a computer-readable storage medium, and a computer program product.

### BACKGROUND

A terminal device may perform a cell handover in a movement process to maintain communication quality. For example, the terminal device may perform an inter-system handover, that is, a handover between cells that support different radio access technologies (radio access technology, RAT).

Even in a scenario in which the foregoing inter-system handover succeeds, there may be a potential problem that causes a future handover failure. If a network side cannot identify such a potential problem, a subsequent handover failure of the terminal device may occur, and communication quality of the terminal is affected.

### SUMMARY

This application provides a solution for communication.

According to a first aspect of this application, a communication method is provided, used for a terminal device. The method includes: successfully performing a handover from a first cell of a first access network device based on a first RAT to a second cell of a second access network device based on a second RAT; generating a first report for the handover, where the first report includes information related to the handover, and the first RAT is different from the second RAT; and sending the first report to a third access network device. Therefore, reports for a handover between different RATs can be supported.

In some embodiments of the first aspect, when the first cell is a new radio (new radio, NR) cell and the second cell is a long term evolution (long term evolution, LTE) cell, the first report includes information indicating that the second cell is the LTE cell.

In some embodiments of the first aspect, when the first cell is an LTE cell and the second cell is an NR cell, the first report includes information indicating that the first cell is the LTE cell.

In some embodiments of the first aspect, the first report further includes at least one of the following: NR cell information of the second cell, where the NR cell information is a predefined value; first indication information, where the first indication information indicates that the first report is related to a handover from the NR cell to the LTE cell; or second indication information, where the second indication information indicates the third access network device to ignore the NR cell information of the second cell in the first report. Therefore, the access network device may ignore the NR cell information of the LTE cell.

In some embodiments of the first aspect, the first report further includes at least one of the following: NR cell information of the first cell, where the NR cell information is a predefined value; third indication information, where the third indication information indicates that the first report is related to a handover from the LTE cell to the NR cell; or fourth indication information, where the fourth indication information indicates an access network device to ignore the NR cell information of the first cell in the first report. Therefore, the access network device may ignore the NR cell information of the LTE cell.

In some embodiments of the first aspect, the predefined value includes one or more bits with a value of 0. Therefore, the predefined value is defined.

In some embodiments of the first aspect, the predefined value is the same as a value of NR cell information of the first cell. Therefore, the predefined value is defined.

In some embodiments of the first aspect, the predefined value is the same as a value of NR cell information of the second cell. Therefore, the predefined value is defined.

In some embodiments of the first aspect, the third access network device is an access network device to which an NR cell accessed by the terminal device belongs. Therefore, the third access network device is defined.

According to a second aspect of this application, a communication method is provided, used for a third access network device. The method includes: receiving a first report from a terminal device, where the first report includes information related to a handover from a first cell of a first access network device based on a first radio access technology RAT to a second cell of a second access network device based on a second RAT; and adjusting, by the third access network device, a mobility parameter based on the first report. Therefore, the access network device may adjust the mobility parameter based on the first report, so that the terminal device subsequently performs an inter-system handover.

In some implementations of the second aspect, the method further includes: When the first cell is an NR cell and the second cell is an LTE cell, the third access network device ignores NR cell information of the second cell in the first report. Therefore, the access network device may ignore the NR cell information of the LTE cell.

In some implementations of the second aspect, the method further includes: When the first cell is an LTE cell and the second cell is an NR cell, the third access network device ignores NR cell information of the first cell in the first report. Therefore, the access network device may ignore the NR cell information of the LTE cell.

In some implementations of the second aspect, the first report further includes at least one of the following: the NR cell information of the second cell, where the NR cell information is a predefined value; first indication information, where the first indication information indicates that the first report is related to a handover from the NR cell to the LTE cell; or second indication information, where the second indication information indicates the third access network device to ignore the NR cell information of the second cell in the first report. Therefore, the access network device may ignore the NR cell information of the LTE cell.

In some implementations of the second aspect, the first report further includes at least one of the following: the NR cell information of the first cell, where the NR cell information is a predefined value; third indication information, where the third indication information indicates that the first report is related to a handover from the LTE cell to the NR cell; or fourth indication information, where the fourth indication information indicates an access network device to ignore the NR cell information of the first cell in the first report. Therefore, the access network device may ignore the NR cell information of the LTE cell.

In some implementations of the second aspect, the predefined value includes one or more bits with a value of 0. Therefore, the predefined value is defined.

In some implementations of the second aspect, the predefined value is the same as a value of NR cell information of the first cell. Therefore, the predefined value is defined.

In some implementations of the second aspect, the predefined value is the same as a value of NR cell information of the second cell. Therefore, the predefined value is defined.

In some implementations of the second aspect, the third access network device is an access network device to which an NR cell accessed by the terminal device belongs. Therefore, the third access network device is defined.

According to the communication method provided according to the first aspect or the second aspect, a network side may obtain, from the terminal device, information about a process in which the terminal device successfully performs the inter-system handover, and therefore optimize the mobility parameter based on the obtained information, to avoid a subsequent handover failure, improve a handover success rate of the terminal device, and improve communication quality of the terminal device.

According to a third aspect of this application, a communication method is provided, used for a primary access network device of a terminal device. The method includes: triggering primary secondary cell (primary secondary cell, PSCell) change; determining first configuration information, where the first configuration information is used to configure to record a second report when the PSCell change succeeds and a trigger condition is met, the first configuration information includes the trigger condition, and the second report includes information related to the success of the PSCell change; and sending the first configuration information to the terminal device. Therefore, the primary access network device may set the first configuration information.

In some implementations of the third aspect, the trigger condition includes at least one of the following:
running duration of a first timer is less than or equal to configured duration of the first timer and is greater than or equal to a first threshold, the first threshold is less than or equal to the configured duration of the first timer, a start time of the first timer is that the terminal device detects a physical layer out-of-synchronization problem with a source secondary access network device, and an end time of the first timer is that the terminal device detects recovery of a radio link between the terminal device and the source secondary access network device; or
running duration of a second timer is less than or equal to configured duration of the second timer and is greater than or equal to a second threshold, the second threshold is less than or equal to the configured duration of the second timer, a start time of the second timer is that the terminal device triggers a measurement report, and an end time of the second timer is that the terminal device detects recovery of a radio link between the terminal device and the source secondary access network device. Therefore, specific timer-related threshold information of the first configuration information is defined.

In some implementations of the third aspect, the determining first configuration information includes: sending a first request to the source secondary access network device, where the first request indicates the source secondary access network device to send second configuration information used to generate the first configuration information; receiving the second configuration information from the source secondary access network device; and determining the first configuration information based on the second configuration information. Therefore, the first configuration information may be determined based on the second configuration information.

In some implementations of the third aspect, the second configuration information includes at least one of the following: the configured duration of the first timer; and the configured duration of the second timer.

In some implementations of the third aspect, the first configuration information further includes a correspondence between the first configuration information and the second configuration information. In one manner, the first configuration information is indicated, and related configuration information, of a secondary cell group, corresponding to the first configuration information is also indicated. In another manner, separate first configuration information of a secondary cell group is set, to be distinguished from first configuration information of an existing master cell group.

In some implementations of the third aspect, the primary access network device may send the first configuration information to the terminal device via the source secondary access network device.

According to a fourth aspect of this application, a communication method is provided, used for a source secondary access network device of a terminal device. The method includes: determining first configuration information, where the first configuration information is used to configure to record a second report when PSCell change succeeds and a trigger condition is met, the first configuration information includes the trigger condition, and the second report includes information related to the success of the PSCell change initiated by a primary access network device; and sending the first configuration information to the terminal device directly or via the primary access network device. Therefore, the source secondary access network device may determine the first configuration information.

In some implementations of the fourth aspect, the trigger condition includes at least one of the following:
running duration of a first timer is less than or equal to configured duration of the first timer and is greater than or equal to a first threshold, the first threshold is less than or equal to the configured duration of the first timer, a start time of the first timer is that the terminal device detects a physical layer out-of-synchronization problem with a source secondary access network device, and an end time of the first timer is that the terminal device detects recovery of a radio link between the terminal device and the source secondary access network device; or
running duration of a second timer is less than or equal to configured duration of the second timer and is greater than or equal to a second threshold, the second threshold is less than or equal to the configured duration of the second timer, a start time of the second timer is that the terminal device triggers a measurement report, and an end time of the second timer is that the terminal device detects recovery of a radio link between the terminal device and the source secondary access network device. Therefore, specific timer-related threshold information of the first configuration information is defined.

In some implementations of the fourth aspect, the method further includes: The source secondary access network device receives a request from the primary access network device, where the request indicates the source secondary access network device to determine the first configuration information. Therefore, the source secondary access network device determines the first configuration information based on the request.

In some implementations of the fourth aspect, the first configuration information is included in a container of a first message sent by the source secondary access network device to the primary access network device. Therefore, the first configuration information may be sent through the container.

According to a fifth aspect of this application, a communication method is provided, used for a primary access network device of a terminal device. The method includes: receiving a first message or a container of a first message from a source secondary access network device of the terminal device, where the first message or the container of the first message includes first configuration information, the first configuration information is used to configure to record a second report when PSCell change succeeds and a trigger condition is met, the first configuration information includes the trigger condition, and the second report includes information related to the success of the primary secondary cell PSCell change initiated by the primary access network device; and sending a second message to the terminal device, where the second message includes the first configuration information. Therefore, the first configuration information may be configured.

In some implementations of the fifth aspect, the trigger condition includes at least one of the following:
running duration of a first timer is less than or equal to configured duration of the first timer and is greater than or equal to a first threshold, the first threshold is less than or equal to the configured duration of the first timer, a start time of the first timer is that the terminal device detects a physical layer out-of-synchronization problem with a source secondary access network device, and an end time of the first timer is that the terminal device detects recovery of a radio link between the terminal device and the source secondary access network device; or
running duration of a second timer is less than or equal to configured duration of the second timer and is greater than or equal to a second threshold, the second threshold is less than or equal to the configured duration of the second timer, a start time of the second timer is that the terminal device triggers a measurement report, and an end time of the second timer is that the terminal device detects recovery of a radio link between the terminal device and the source secondary access network device. Therefore, specific timer-related threshold information of the first configuration information is defined.

According to a sixth aspect of this application, a communication method is provided, used for a terminal device. The method includes: receiving first configuration information from a primary access network device or a source secondary access network device, where the first configuration information is used to configure to record a second report when PSCell change succeeds and a trigger condition is met, the first configuration information includes the trigger condition, and the second report includes information related to the success of the primary secondary cell PSCell change initiated by the primary access network device. Therefore, the first configuration information may be configured.

In some implementations of the sixth aspect, the trigger condition includes at least one of the following:
running duration of a first timer is less than or equal to configured duration of the first timer and is greater than or equal to a first threshold, the first threshold is less than or equal to the configured duration of the first timer, a start time of the first timer is that the terminal device detects a physical layer out-of-synchronization problem with a source secondary access network device, and an end time of the first timer is that the terminal device detects recovery of a radio link between the terminal device and the source secondary access network device; or
running duration of a second timer is less than or equal to configured duration of the second timer and is greater than or equal to a second threshold, the second threshold is less than or equal to the configured duration of the second timer, a start time of the second timer is that the terminal device triggers a measurement report, and an end time of the second timer is that the terminal device detects recovery of a radio link between the terminal device and the source secondary access network device. Therefore, specific timer-related threshold information of the first configuration information is defined.

According to the communication methods according to the fourth aspect to the sixth aspect, in a scenario in which the primary access network device triggers the PSCell change, the primary access network device may configure the terminal device to report a report including the information related to the success of the PSCell change, for example, including a first threshold or a second threshold for triggering the report, so that the terminal device can be accurately triggered to report the report, and a network side performs mobility optimization based on the report.

According to a seventh aspect of this application, a communication method is provided, and includes: A terminal device receives a configuration of a first random access channel (RACH) resource and a configuration of a second RACH resource from a primary access network device, to initiate random access to a target primary secondary cell; determines whether a first trigger condition and/or a second trigger condition for a second report are/is met; and when the first trigger condition and/or the second trigger condition for the second report are/is met, sends a random access request on the first RACH resource; or when the first trigger condition and/or the second trigger condition for the second report are/is not met, sends a random access request on the second RACH resource, where the second report includes information related to a success of primary secondary cell PSCell change initiated by the primary access network device. In information related to a success of primary secondary cell PSCell change or addition, the PSCell change or addition may be common PSCell change or addition, or may be conditional PSCell change or addition. The PSCell addition is triggered by the primary access network device, and the PSCell change may be triggered by the primary access network device or a secondary access network device. Therefore, a network side may sense whether the trigger condition for the first report is met.

According to an eighth aspect of this application, a communication method is provided, and includes: A target secondary access network device allocates a first RACH resource and a second RACH resource to a terminal device; sends a configuration of the first RACH resource and a configuration of the second RACH resource to a primary access network device; and when the target secondary access network device receives random access initiated by the terminal device on the first RACH resource, determines that the terminal device meets a first trigger condition and/or a second trigger condition for a second report; or when receiving a random access request of the terminal device on the second RACH resource, determines that the terminal device does not meet a trigger condition for a second report, where the second report includes information related to a success of primary secondary cell PSCell change initiated by the primary access network device. In information related to a success of primary secondary cell PSCell change or addition, the PSCell change or addition may be common PSCell change or addition, or may be conditional PSCell change or addition. The PSCell addition is triggered by the primary access network device, and the PSCell change may be triggered by the primary access network device or a secondary access network device. Therefore, a network side may sense whether the trigger condition for the first report is met.

In an implementation of the seventh aspect or the eighth aspect, the first trigger condition includes: Running duration of a first timer is greater than a first threshold, the first threshold is less than configured duration of the first timer, a start time of the first timer is that the terminal device detects a physical layer out-of-synchronization problem with a source secondary access network device, and an end time of the first timer is that the terminal device detects recovery of a radio link between the terminal device and the source secondary access network device; and the second trigger condition includes: Running duration of a second timer is greater than a second threshold, the second threshold is less than configured duration of the second timer, a start time of the second timer is that the terminal device triggers a measurement report, and an end time of the second timer is that the terminal device detects recovery of a radio link between the terminal device and the source secondary access network device. According to a ninth aspect of this application, a communication method is provided, and includes: A target secondary access network device determines running duration of a third timer of a terminal based on a time period from a time point at which the terminal device receives an RRC reconfiguration complete message to a time point at which the terminal device successfully complete random access; and when the running duration of the third timer is greater than a third threshold corresponding to a third trigger condition determined by the target secondary access network device for the terminal, determines that the terminal device generates a second report, where the second report includes information related to a success of primary secondary cell PSCell change initiated by a primary access network device. In information related to a success of primary secondary cell PSCell change or addition, the PSCell change or addition may be common PSCell change or addition, or may be conditional PSCell change or addition. The PSCell addition is triggered by the primary access network device, and the PSCell change may be triggered by the primary access network device or a secondary access network device. Therefore, a network side may sense whether the trigger condition for the first report is met.

In an implementation of the ninth aspect, the third trigger condition includes: The running duration of the third timer is greater than the third threshold, the third threshold is less than configured duration of the third timer, a start time of the third timer is that the terminal device receives an RRC reconfiguration message, and an end time of the third timer is duration for successfully completing random access to a target primary secondary access network device. Therefore, the network side may sense whether the trigger condition for the first report is met.

According to the communication methods according to the seventh aspect to the ninth aspect, the network side may learn whether the terminal device has the second report, where the second report includes the information related to the success of the PSCell change initiated by the primary access network device, so that the network side may request the second report from the terminal device, and optimize a mobility parameter based on the second report. According to a tenth aspect of this application, a communication apparatus is provided, and includes at least one processor and at least one memory. The at least one memory is coupled to the at least one processor and stores instructions executed by the at least one processor, and when the instructions are executed by the at least one processor, the communication apparatus is enabled to implement an operation of the method according to any one of the first aspect to the ninth aspect or the implementations of the first aspect to the ninth aspect.

According to an eleventh aspect of this application, a computer-readable storage medium is provided. The computer-readable storage medium stores instructions, and when the instructions are executed by an electronic device, the electronic device is enabled to implement an operation of the method according to any one of the first aspect to the ninth aspect or the implementations of the first aspect to the ninth aspect.

According to a twelfth aspect of this application, a computer program product is provided. The computer program product includes instructions, and when the instructions are executed, an operation of the method according to any one of the first aspect to the ninth aspect or the implementations of the first aspect to the ninth aspect is implemented.

According to a thirteenth aspect of this application, a communication apparatus is provided. The communication apparatus includes a unit or a module configured to implement the method according to any one of the first aspect to the ninth aspect or the implementations of the first aspect to the ninth aspect.

For example, the communication apparatus described according to the tenth aspect or the third aspect may be a terminal, or an apparatus, for example, a chip, used for the terminal.

For example, the communication apparatus described according to the tenth aspect or the third aspect may be an access network device, or an apparatus, for example, a chip, used for the access network device. The access network device may be a base station, or a device that has some functions of the base station.

According to a fourteenth aspect of this application, a communication system is provided, and includes a terminal device and an access network device. The terminal device may be configured to perform the method according to the first aspect, and the access network device may be configured to perform the method according to the second aspect.

According to a fifteenth aspect of this application, a communication system is provided, and includes a primary access network device, a source secondary access network device, and a target secondary access network device. The primary access network device may be configured to perform the method according to the third aspect.

According to a sixteenth aspect of this application, a communication system is provided, and includes a primary access network device, a source secondary access network device, and a target secondary access network device. The source secondary access network device may be configured to perform the method according to the fourth aspect, and the primary access network device may be configured to perform the method according to the fifth aspect.

In an implementation of the sixteenth aspect, the communication system further includes a terminal device, and the terminal device may be configured to perform the method according to the sixth aspect.

According to a seventeenth aspect of this application, a communication system is provided, and includes a primary access network device, a source secondary access network device, and a target secondary access network device. The target secondary access network device may be configured to perform the method according to the ninth aspect.

In an implementation of the seventeenth aspect, the communication system further includes a terminal device, and the terminal device may be configured to perform the method according to the eighth aspect.

### BRIEF DESCRIPTION OF DRAWINGS

Features, advantages, and other aspects of implementations of this application become more apparent with reference to the accompanying drawings and the following detailed descriptions. Several implementations of this application are shown herein by way of example but not limitation. In the accompanying drawings:
FIG. 1A is a block diagram of a communication network in which a possible implementation of this application may be performed;
FIG. 1B is a diagram of a possible MR-DC control plane architecture in which this application may be performed;
FIG. 2A is a signaling exchange diagram of an example communication process according to a possible implementation of this application;
FIG. 2B is a signaling exchange diagram of an example communication process according to a possible implementation of this application;
FIG. 2C is a signaling exchange diagram of an example communication process according to a possible implementation of this application;
FIG. 3 is a signaling exchange diagram of an example communication process according to another possible implementation of this application;
FIG. 4A is a signaling exchange diagram of an example communication process according to still another possible implementation of this application;
FIG. 4B is a signaling exchange diagram of an example communication process according to still another possible implementation of this application;
FIG. 5 is a signaling exchange diagram of an example communication process according to yet another possible implementation of this application;
FIG. 6A is a signaling exchange diagram of an example PAC communication process according to a possible implementation of this application;
FIG. 6B is a signaling exchange diagram of an example CPAC communication process according to a possible implementation of this application;
FIG. 7 is a flowchart of a communication method according to a possible implementation of this application;
FIG. 8 is a flowchart of a communication method according to another possible implementation of this application;
FIG. 9 is a flowchart of a communication method according to still another possible implementation of this application;
FIG. 10 is a flowchart of a communication method according to yet another possible implementation of this application; and
FIG. 11 is a simplified block diagram of an example device suitable for implementing a possible implementation of this application.

In the accompanying drawings, identical or similar reference numerals indicate identical or similar elements.

### DESCRIPTION OF EMBODIMENTS

Embodiments of this disclosure are described in more detail below with reference to the accompanying drawings.

Terms used in the following embodiments of this application are merely intended to describe specific embodiments, but are not intended to limit this application. As used in this specification and the claims of this application, a singular expression form, "one", "a", "said", "foregoing", "the", or "this", is intended to also include a plural expression form, unless clearly indicated to the contrary in the context. It should be further understood that the term "and/or" used in this application means and includes any or all possible combinations of one or more listed items.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". It should be understood that expressions such as "first", "second", and "third" are merely intended to indicate that a plurality of objects may be different, but it is not excluded that two objects are the same. The expressions such as "first", "second", and "third" should not be construed as any limitation on the embodiments. The terms "first" and "second" are merely intended for a purpose of description, and shall not be understood as an indication or implication of relative importance or an implicit indication of a quantity of indicated technical features. Therefore, a feature limited by "first" and "second" may explicitly or implicitly include one or more features. In the descriptions of embodiments of this application, unless otherwise designated, "a plurality of" means two or more. The following may further include other explicit and implied definitions.

An "embodiment" mentioned in this application means that a particular feature, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

Mutual reference may be made to content in embodiments of this application. Unless otherwise stated or there is a logic conflict, terms and/or descriptions in different embodiments are consistent and may be mutually referenced, and technical features in different embodiments may be combined based on an internal logical relationship thereof, to form a new embodiment.

In a wireless network, one terminal device may communicate with a plurality of access network devices, that is, DC, which is also referred to as MR-DC.

In an MR-DC scenario, an access network device that exchanges control plane signaling with a core network is referred to as a master node (master node, MN), and another access network device is referred to as a secondary node (secondary node, SN). In addition, the MN and/or the SN may have a user plane connection to the core network.

MR-DC includes various DC, such as evolved universal mobile telecommunications system terrestrial radio access network new radio dual connectivity (E-UTRA New Radio Dual Connectivity, EN-DC), next generation radio access network (NG Radio Access Network, NG-RAN) evolved universal terrestrial radio access-new radio (Evolved Universal Terrestrial Radio Access-New Radio, E-UTRA-NR) dual connectivity (NG-RAN E-UTRA-NR Dual Connectivity, NGEN-DC), NR-E-UTRA dual connectivity (NR-E-UTRA Dual Connectivity, NE-DC), and NR-dual connectivity (New Radio-Dual Connectivity, NR-DC). For example, both the MN and the SN are base stations. In EN-DC, the MN is an LTE base station (eNB) connected to a 4G core network (EPC), and the SN is an NR base station. In NGEN-DC, the MN is an LTE base station (ng-eNB) connected to a 5G core network (5GC), and the SN is an NR base station. In NE-DC, the MN is an NR base station connected to a 5G core network 5GC, and the SN is an LTE base station. In NR-DC, the MN is an NR base station connected to a 5G core network 5GC, and the SN is an NR base station.

In MR-DC, there is a primary cell (primary cell, PCell) in the MN, and there is a primary secondary cell (PSCell) in the SN. The primary cell is a cell that is deployed at a dominant frequency and in which a terminal device initiates an initial connection establishment process or a connection reestablishment process, or a cell indicated as a primary cell in a handover process. The primary secondary cell is a cell in which a terminal device initiates a random access process in the SN, or a cell in which a terminal device skips a random access process in an SN change process and initiates data transmission, or a cell of an SN in which a terminal device initiates random access in a synchronous reconfiguration process.

A terminal device may be simultaneously served by a plurality of cells in one base station. Therefore, a serving cell group provided by the MN for the terminal device may also be referred to as a master cell group (master cell group, MCG). Similarly, a serving cell group provided by the SN for the terminal device is referred to as a secondary cell group (secondary cell group, SCG). The MCG and the SCG each include at least one cell (Cell). When there is only one cell in the MCG, the cell is a PCell of the terminal device. When there is only one cell in the SCG, the cell is a PSCell of the terminal device. The PCell and the PSCell are collectively referred to as a special cell (special cell, SpCell). When there are a plurality of cells in the MCG or the SCG, a cell other than the SpCell is referred to as a secondary cell (SCell). In this case, an SCell and a SpCell in each cell group (CG) undergo carrier aggregation (carrier aggregation, CA) to jointly provide a transmission resource for the terminal device.

In a primary secondary cell addition/change (PSCell addition/change, PAC) process, when no PSCell is configured for a terminal device, a network side triggers PSCell addition, that is, configures MR-DC for the terminal device. The PSCell addition can be triggered only by an MN. A procedure is as follows: The MN sends an SN addition request message to a target SN. The target SN returns an SN addition request acknowledgment message to the MN, where the message carries information about a target SCG configured by the target SN for the terminal device. The MN also delivers an SN or SCG addition command to the terminal device by using an RRC message, where the command carries the information about the target SCG. When a PSCell is configured for a terminal device, due to mobility of the terminal device, a network side triggers PSCell change (that is, the network side indicates the terminal device to perform a handover from one PSCell to another PSCell). The network side delivers an SN or SCG change command to the terminal device by using an RRC message, where the command carries information about a target SCG. The PSCell change may be triggered by an MN, or may be triggered by an SN. For MN triggering, the MN sends an SN addition request message to a target SN. The target SN returns an SN addition request acknowledgment message to the MN, where the message carries information about a target SCG configured by the target SN for the terminal device. Then, the MN notifies a source SN to perform release, and the MN delivers an SN or SCG addition command to the terminal device by using an RRC message, where the command carries the information about the target SCG. For SN triggering, a source SN sends an SN change requirement message to the MN. The MN sends an SN addition request message to a target SN. The target SN returns an SN addition request acknowledgment message to the MN, where the message carries information about a target SCG configured by the target SN for the terminal device. Then, the MN sends an SN change requirement acknowledgment message to the source SN. A sequence in which the terminal device sends an RRC reconfiguration complete message and performs random access to a target PSCell is determined based on implementation of the terminal device. In a conditional primary secondary cell addition/change (conditional PSCell addition/change, CPAC) mechanism process, a corresponding trigger node (MN/SN) prepares a plurality of candidate PSCell cells in advance, and sends a CPAC configuration to the terminal device. The CPAC configuration includes candidate cell information, a measurement configuration, and a handover trigger condition. After receiving information about the CPAC configuration, if the terminal device finds that signal quality of a candidate cell meets the handover trigger condition, the terminal device uses the candidate cell as a target cell, performs random access, and performs a PSCell addition or handover procedure.

A successful handover report (successful handover report, SHR) is applicable to the following scenario. In an intra-NR (intra-NR) scenario, that is, in a mobility success scenario of a handover from an NR cell to another NR cell, there may be a potential problem that may cause a mobility failure. A potential failure does not mean a true failure. Instead, in a process in which the terminal device successfully performs an intra-NR handover, where the handover may be a basic handover (handover, HO), a conditional handover (conditional handover, CHO), or a dual active protocol stack handover (Dual Active Protocol Stack handover, DAPS HO), a phenomenon close to a handover failure occurs. Therefore, an SHR is recorded. To identify the potential mobility failure problem in the mobility success scenario, the terminal device records and reports a parameter in a handover success process, that is, the SHR, to a network. The SHR is used to record mobility-related information of a successful handover with a potential failure. A source base station may optimize mobility of the terminal device with reference to SHR information and a context of the terminal device.

The network side first configures an SHR trigger condition for the terminal device. The SHR trigger condition is delivered to the terminal device by using an RRC reconfiguration message sent by the source base station to the terminal device. The SHR is recorded only when the trigger condition is met. Recording of the SHR is triggered when timing results of three timers T304/T310/T312 reach a specific threshold (the threshold is usually a percentage of configured duration of T304/T310/T312 or an absolute value less than the configured duration) or when an RLF occurs in a source cell during the DAPS handover. Running duration of the timer T304 indicates duration from a time point at which the terminal device receives an RRC reconfiguration message to a time point at which the terminal device successfully completes random access to a target access network device. The terminal device starts the timer T304 when receiving the RRC reconfiguration message. When the running duration of the timer T304 is greater than or equal to a specific threshold 1, the terminal device determines that a handover failure occurs. When the running duration of the timer T304 is greater than or equal to a specific threshold 2, the terminal considers that there is a potential handover failure, and triggers recording of an SHR. Herein, a value of the specific threshold 1 is greater than a value of the specific threshold 2. Running duration of the timer T310 indicates duration in which the terminal device detects a physical layer problem (physical layer problem) with a source access network device (the problem is usually that continuously received downlink out-of-synchronization indications exceed a specific threshold). After the timer T310 is started, the timer T310 is stopped if a radio link is recovered during running of the timer T310. When the running duration of the timer T310 is greater than or equal to a specific threshold 3, the terminal device determines that a radio link failure occurs. When the running duration of the timer T310 is greater than or equal to a specific threshold 4, the terminal device considers that there is a potential possibility that a radio link failure occurs, and triggers recording of an SHR. Herein, a value of the specific threshold 3 is greater than a value of the specific threshold 4. The timer T312 is started during running of the timer T310. Running duration of the timer T312 indicates duration from a time point at which the terminal device triggers a measurement report (usually) to a time point at which the terminal device recovers synchronization with the source access network device during running of the timer T312. When the running duration of the timer T312 is greater than or equal to a first specific threshold, the terminal device determines that a radio link failure occurs. When the running duration of the timer T312 is greater than or equal to a second specific threshold, the terminal device considers that there is a potential possibility that a radio link failure occurs, and triggers recording of an SHR. Herein, a value of the first specific threshold is greater than a value of the second specific threshold. In general, the SHR triggered by the timer T304 usually points to a potential failure generated in a process in which the terminal device accesses a target cell, for example, caused by a premature handover. The SHR triggered by the timer T310/T312 due to the RLF that occurs in the source cell usually points to a potential failure between the terminal device and the source cell, for example, caused by a delayed handover.

A reporting mechanism of the SHR report is delayed reporting. To be specific, the terminal device does not immediately report a recorded SHR report to an access network device after the terminal device accesses the network. Instead, the network has a mechanism to agree to request, by using an RRC message, the terminal device to report the SHR report. The terminal device sends the report to the access network device by using an RRC message, so that the access network device identifies a mobility process problem and optimizes a mobility parameter. The mobility parameter is a parameter related to T310 and T312. The SHR report includes at least one of the following information: source cell information: records a cell identifier and a measurement result of a source PCell; target cell information: records a cell identifier and a measurement result of a target PCell, where the cell identifier may be a cell global identifier (CGI), and/or a physical cell identifier (PCI), and/or a frequency, and the measurement result includes available measurement that is based on an SSB and a CSI-RS at a handover completion moment, and a record of a cell-level RSRP, RSRQ, and SINR and a beam-level RSRP and RSRQ of the source PCell cell; an SHR trigger condition, for example, one or more of the following four trigger condition cause values T310, T312, T304, and DAPS failure (DAPSFailure) are set as a Tr terminal device for indication; or a neighboring cell measurement result: records an identifier and a measurement result of a neighboring cell during a handover. The specific thresholds of T310, T312, and T304 may be used as SHR trigger conditions. The threshold of T310/T312 for the SHR is configured by the source PCell, and reflects a physical layer out-of-synchronization problem between the terminal device and the source PCell cell, to optimize a radio link monitoring (radio link management, RLM)/beam failure detection (beam failure detection, BFD) configuration. The threshold of T304 for the SHR is configured by a target PCell, and reflects a random access problem between the terminal device and a target PSCell.

Similar to an SHR for a successful primary cell handover, in MR-DC, a successful primary secondary cell report (successful PSCell report, SPR) is recorded when PSCell addition/change succeeds and the trigger condition is met. The SHR is recorded with reference to a T310/T312/T304 trigger condition for the SHR. The SPR also has a T310/T312/T304 trigger condition. The timer T310/T312 is used to detect a physical layer out-of-synchronization problem between the terminal device and a current PSCell (that is, a source PSCell). Therefore, a related condition/threshold of the timer T310/T312 may be used as an SPR trigger condition only in a PSCell change procedure, and cannot be used as an SPR trigger condition in a PSCell addition procedure (the source PSCell is not present in the PSCell addition procedure). A threshold of the timer T304 related to the PSCell addition/change is configured by a target PSCell. Therefore, a threshold of T304 for the SPR is also configured by the target PSCell. Thresholds of the timers T310 and T312 related to a radio link failure (RLF) of an SCG are configured by the source PSCell. Because the PSCell change may be triggered by the MN or the SN, a specific node configuring thresholds of T310 and T312 for the SPR is separately discussed based on different trigger nodes. When the SN triggers the PSCell change, the source SN serves as both a trigger node and a node configuring T310 and T312 of the SCG, and the thresholds of T310 and T312 for the SPR are configured by the source SN. When the MN triggers the PSCell change, currently, there is no clear solution for configuring T310 and T312 for the SPR. A manner in which the terminal device records the SPR and reports the SPR to the network side is not clear currently. In a possible manner, delayed reporting is used, which is the same as delayed reporting of the SHR. After recording the SPR, the terminal device indicates presence of the SPR report to the network side in an RRC complete message. The network side learns of the presence of the SPR report, and requests, by using a message, the terminal device to report the SPR report. The terminal device sends the report to the access network device by using a response message. In another possible manner, after successfully randomly accessing the target PSCell, the terminal device immediately sends the SPR report to the MN or the SN.

Therefore, based on the foregoing case, a technical problem to be first resolved in this application is that an existing SHR report records only information about an NR source cell and an NR target cell for an intra-NR handover, an LTE cell cannot be recorded as a target cell during an NR-to-E-UTRA handover in an inter-RAT, and an LTE cell cannot be recorded as a source cell during an E-UTRA-to-NR handover in the inter-RAT. In addition, because the threshold of T310/T312 is configured by the source PSCell and the threshold of T304 is configured by the target PSCell, when the PSCell change is triggered by the MN/SN, a corresponding trigger node may determine the trigger threshold of T310/T312 for the SPR. If the PSCell change is triggered by the MN, the MN does not know a timer configuration of the source PSCell and cannot configure the trigger conditions of T310 and T312 for the SPR. Further, during the PSCell change/addition, a sequence in which the terminal device sends a reconfiguration complete message and performs random access is determined based on implementation of the terminal device. If the terminal device first sends the RRC reconfiguration complete message and then performs random access to the target PSCell, the terminal device cannot indicate presence of the SPR report to the MN in the RRC reconfiguration complete message because a prerequisite for generating the SPR report is that the terminal device successfully performs random access to the target PSCell and the SPR trigger condition is met. Therefore, after the terminal device successfully accesses the target PSCell, in a subsequent procedure, the terminal device does not have an opportunity to send the RRC complete message to the MN. As a result, the network side cannot learn of the presence of the SPR.

For the foregoing technical problem, the technical solution provided in this application is as follows: When a terminal device successfully performs a handover from an NR cell to an LTE cell, where an SHR report supports recording of LTE target cell information, and when the terminal device successfully performs a handover from an LTE cell to an NR cell, where an SHR report supports recording of LTE source cell information. This application further provides a plurality of manners of configuring an SPR trigger condition for the terminal device in a procedure in which an MN triggers PSCell change. Further, this application provides a manner in which a network side senses SPR availability (presence of an SPR report).

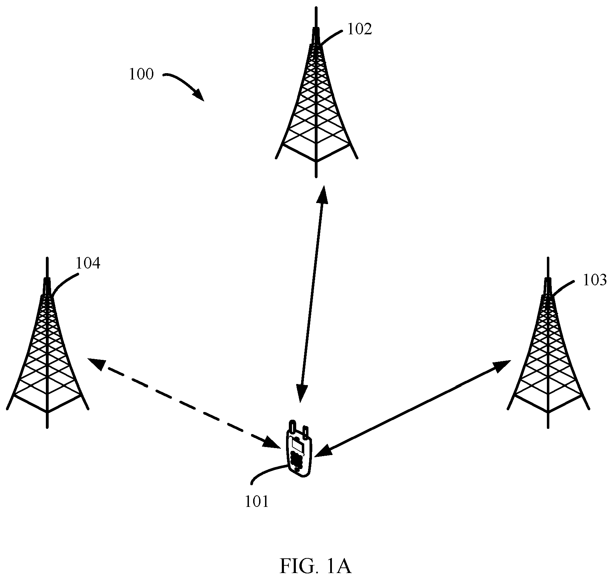

FIG. 1A is a block diagram of a communication network 100 in which a possible implementation of this application may be performed. This application may be applied to the communication network 100 shown in FIG. 1A. As shown in FIG. 1A, the communication network 100 includes a terminal and an access network device, for example, a terminal device 101 and access network devices 102, 103, and 104.

The terminal device shown in FIG. 1A may also be referred to as user equipment (UE), a mobile station (MS), a mobile terminal (MT), or the like, and is a device that provides voice and/or data connectivity for a user, for example, a handheld device or a vehicle-mounted device having a wireless connection function. Currently, some examples of the terminal are a mobile phone, a tablet computer, a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like. The terminal may have a plurality of SIMs.

The access network device shown in FIG. 1A is a radio access network (radio access network, RAN) node (or device) that connects the terminal to a wireless network, for example, a base station.

For example, the access network device may be a next generation NodeB (next generation NodeB, gNB) in a new radio (new radio, NR) system, a transmission reception point (transmission reception point, TRP), an evolved NodeB (evolved NodeB, eNB), a home NodeB (for example, a home evolved NodeB, or a home NodeB, HNB), a baseband unit (baseband unit, BBU), a Wi-Fi access point (access point, AP), or an integrated access and backhaul (integrated access and backhaul, IAB) device.

In addition, in a network structure, the access network device may include a central unit (central unit, CU), a distributed unit (distributed unit, DU), or a RAN device including a CU and a DU. In the access network device including the CU and the DU, functions of some protocol layers are centrally controlled by the CU, and functions of some or all of remaining protocol layers are distributed in the DU, and the CU centrally controls the DU. For example, a radio resource control (radio resource control, RRC) layer, a service data adaptation protocol (service data adaptation protocol, SDAP) layer, and a packet data convergence protocol (packet data convergence protocol, PDCP) layer are deployed in the CU. A radio link control (radio link control, RLC) layer, a medium access control (medium access control, MAC) layer, and a physical layer (physical layer, PHY) are deployed in the DU. Therefore, the CU has processing capabilities of the RRC layer, the SDAP layer, and the PDCP layer. The DU has processing capabilities of the RLC layer, the MAC layer, and the PHY layer.

It should be understood that the foregoing function division is merely an example, and does not constitute a limitation on the CU and the DU. In other words, there may be another function division manner between the CU and the DU. This is not limited herein.

In a possible implementation, functions of the CU may be implemented by one entity, or may be implemented by different entities. The functions of the CU may be further divided. For example, a control plane (control plane, CP) and a user plane (user plane, UP) in the CU may be separated to obtain a control plane of the CU (CU-CP) and a user plane of the CU (CU-UP). For example, the CU-CP and the CU-UP may be implemented by different functional entities. The CU-CP and the CU-UP may be coupled to the DU to jointly implement functions of an access network device.

In a possible manner, the CU-CP is responsible for a control plane function, and is mainly responsible for functions of RRC and a PDCP-C. The PDCP-C is mainly responsible for encryption and decryption, integrity protection, data transmission, and the like of control plane data. The CU-UP is responsible for a user plane function, and is mainly responsible for functions of SDAP and a PDCP-U. The SDAP is mainly responsible for processing data of a core network and mapping a data flow (flow) to a bearer. The PDCP-U is mainly responsible for encryption and decryption, integrity protection, header compression, sequence number maintenance, data transmission, and the like of a data plane. The CU-CP and the CU-UP may be connected through an E1 interface. The CU-CP may be connected to a core network device through a next generation (next generation, NG) interface. The DU and the CU-CP may be connected through an F1-C interface. The DU and the CU-UP may be connected through an F1-U interface. In another possible implementation, the PDCP-C is also in the CU-UP.

In a possible implementation, the CU-CP may be divided into a CU-CP 1 and a CU-CP 2. The CU-CP 1 includes various radio resource management functions, and the CU-CP 2 includes only the function of the PDCP-C (that is, a basic function of control plane signaling at the PDCP layer).

It may be understood that quantities of terminal devices and access network devices shown in FIG. 1A are merely an example, and are not intended to impose any limitation. According to an actual requirement, the communication network 100 may include any appropriate quantities of various types of network elements. In addition, the solutions in this application may be applied to an LTE system, an NR system, a non-terrestrial network (NTN) system, or a future mobile communication system. The access network devices 102, 103, and 104 may be used as access network devices that connect the terminal 101 to a network. In addition, the access network devices 102, 103, and 104 may be used as a primary access network device (MN), a source secondary access network device (source SN, S-SN), and a target secondary access network device (target SN, T-SN) in a PSCell handover process in MR-DC.

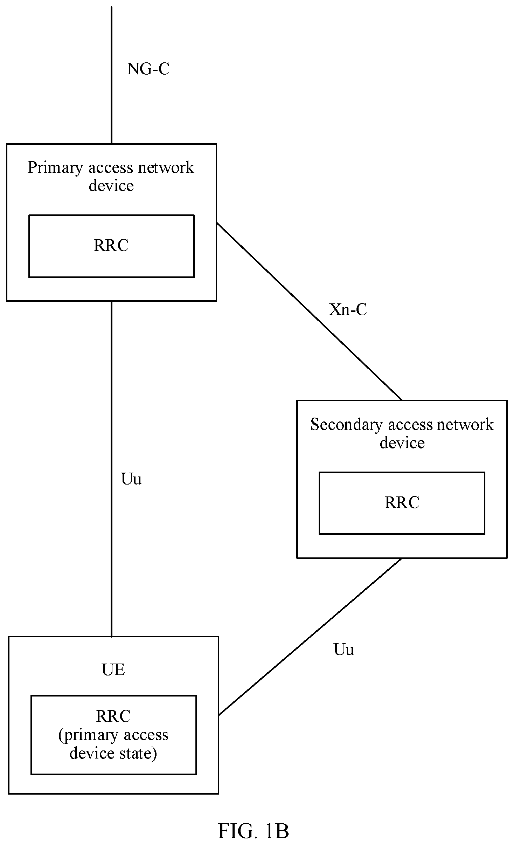

FIG. 1B is a diagram of a possible MR-DC control plane architecture in which this application may be performed. As shown in FIG. 1B, an MN and an SN each have a radio resource control (RRC) entity, and may generate an RRC message (that is, a control message, such as a measurement message). In addition, the SN may directly send, to UE, an RRC message generated by the SN (in this case, an RRC message sent by the UE to the SN is also directly sent to the SN, and the RRC message directly exchanged between the SN and the UE is referred to as a signaling radio bearer 3 (SRB3)). Alternatively, an RRC message generated by the SN may be notified to the MN, and the MN sends the RRC message to the UE (in this case, an RRC message given by the UE to the SN is also forwarded to the SN via the MN, that is, the UE sends the RRC message to the MN).

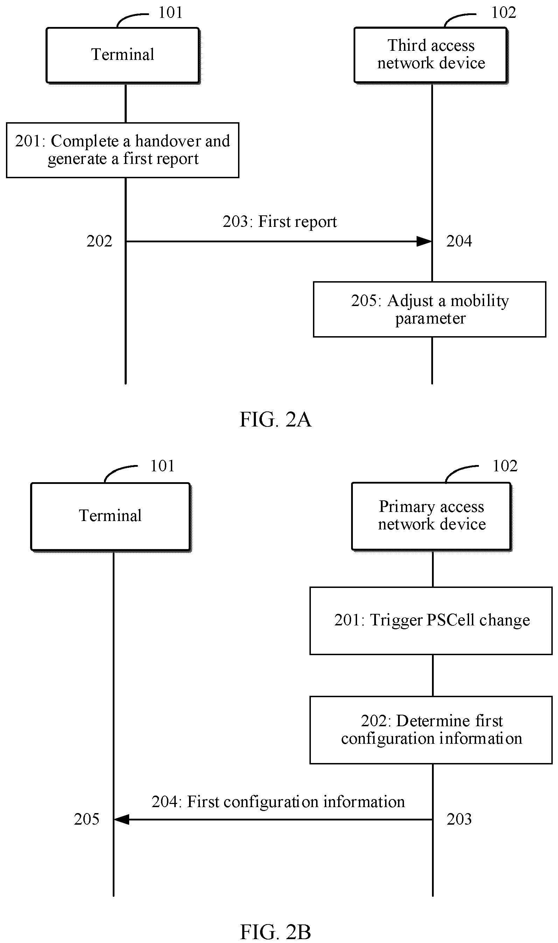

FIG. 2A is a signaling exchange diagram of an example communication process 200A according to a possible implementation of this application. For purposes of description, the communication process 200A is described with reference to the various elements shown in FIG. 1A. However, it should be understood that the communication process 200A may also be performed between an access network device and a terminal device in any other communication scenario.

As shown in FIG. 2A, a terminal device 101 successfully performs a handover from a first cell of a first access network device based on a first RAT to a second cell of a second access network device based on a second RAT. Then, the terminal device 101 generates (201) a first report for the handover. The first report includes information related to the handover, and the first RAT is different from the second RAT.

In some implementations, when the first cell is an NR cell and the second cell is an LTE cell, the first report includes information indicating that the second cell is the LTE cell. When the first cell is an LTE cell and the second cell is an NR cell, the first report includes information indicating that the first cell is the LTE cell. Specifically, the first report corresponds to an SHR report. Target LTE cell information including an identifier and a measurement result of a target LTE cell, is newly added to the SHR report to support information recording of an NR-LTE handover. In addition, source LTE cell information including an identifier and a measurement result of a source LTE cell is correspondingly added to support information recording of an LTE-NR handover. An identifier of an LTE cell may be a cell global identifier (CGI), and/or a physical cell identifier (PCI), and/or a frequency. A measurement result of an LTE cell includes an available RSRP, an available RSRQ, and an available SINR of the LTE cell at a handover completion moment.

In some implementations, when the handover is a handover from the NR cell to the LTE cell, the first report further includes NR cell information of the second cell, where the NR cell information is a predefined value; the first report includes first indication information, where the first indication information indicates that the first report is related to the handover from the NR cell to the LTE cell; or the first report includes second indication information, where the second indication information indicates a third access network device to ignore the NR cell information of the second cell in the first report.

Specifically, the first report may be an SHR report, or may be any report that includes the information related to the successful handover from the first cell to the second cell. The following uses the SHR as an example.

In the handover from the NR cell to the LTE cell, if the terminal device 101 records an SHR, the first cell is a source cell, and the second cell is a target cell, the target cell should be set to the LTE cell. However, the target cell in an existing SHR is the NR cell and is a mandatory setting. Therefore, the SHR includes the NR cell information of the second cell. Therefore, to enable an access network device to determine that the valid target cell in the SHR in the procedure of the handover from the NR cell to the LTE cell is the LTE cell, the following solution is provided. When the terminal device 101 determines that the handover is the inter-system handover from the NR cell to the LTE cell, the terminal device 101 sets NR target cell information to a predefined value. In some implementations, the predefined value includes one or more bits with a value of 0. For example, all bits corresponding to an information element are set to 0. In some implementations, the predefined value is a predefined rule. The NR information of the second cell is set to be the same as a value of NR cell information of the first cell, or an NR cell identifier of the second cell may be set to be the same as a value of an NR cell identifier of the first cell. Therefore, in the foregoing solution, when the third access network device 102 receives the SHR, the third access network device 102 determines, based on LTE cell information of the second cell in the SHR report, and/or the value of the NR target cell information of the second cell being the predefined value, that the LTE target cell is a true target cell. Alternatively, the third access network device 102 determines that information recorded in the SHR is information related to a successful handover from the NR cell to the LTE cell. Alternatively, the first report may carry first indication information, where the indication information indicates that the SHR is related to the handover from the NR cell to the LTE cell; or the first indication information indicates the third access network device 102 to ignore the NR target cell information.

Similarly, when the handover is LTE-NR, the first report further includes NR cell information of the first cell, where the NR cell information is a predefined value; the first report includes third indication information, where the third indication information indicates that the first report is related to a handover from an LTE cell to an NR cell; or the first report includes fourth indication information, where the fourth indication information indicates the third access network device 102 to ignore the NR cell information of the first cell in the first report. The predefined value may also include one or more bits with a value of 0. For example, all bits corresponding to an information element are set to 0. In some implementations, the predefined value is a value that is set according to a predefined rule. For example, the NR cell information of the first cell is set to be the same as a value of NR cell information of the second cell.

As shown in FIG. 2A, the third access network device 102 receives (204) the first report from the terminal device 101. The first report includes the information related to the handover from the first cell of the first access network device based on the first radio access technology RAT to the second cell of the second access network device based on the second RAT. After receiving the first report, the third access network device 102 adjusts (205) a mobility parameter based on the first report.

In some implementations, when the first cell is a new radio NR cell and the second cell is a long term evolution LTE cell, the third access network device 102 ignores the NR cell information of the second cell in the first report. When the first cell is an LTE cell and the second cell is an NR cell, the third access network device 102 ignores the NR cell information of the first cell in the first report. In some implementations, the third access network device 102 is an access network device to which an NR cell accessed by the terminal device 101 belongs. Specifically, the access network device 102 receiving the SHR determines, based on the LTE cell information of the second cell (that is, related information indicating that the LTE cell is a target cell) in the SHR, and/or a value of the NR cell information of the second cell being the predefined value, that the SHR is related to the handover from the NR cell to the LTE cell, that is, the access network device 102 determines to ignore the NR target cell information. Similarly, the access network device 102 receiving the SHR determines, based on LTE cell information of the first cell (related information indicating that the LTE cell is a source cell) in the SHR, and/or a value of the NR cell information of the first cell being the predefined value, that the SHR is related to the handover from the LTE cell to the NR cell, that is, the access network device 102 determines to ignore NR source cell information.

According to the foregoing technical solution, the SHR supports both information recording of an intercell handover of the terminal device in an intra-system and information recording of an inter-system (which may also be referred to as an inter-RAT) handover.

FIG. 2B is a signaling exchange diagram of an example communication process 200B according to a possible implementation of this application. For purposes of description, the communication process 200B is described with reference to the various elements shown in FIG. 1A. However, it should be understood that the communication process 200B may also be performed between an access network device and a terminal device in any other communication scenario.

As shown in FIG. 2B, a primary access network device 102 triggers (201) PSCell change, which may be common PSCell change or conditional PSCell change. The primary access network device 102 determines (202) first configuration information. The first configuration information is used to configure a terminal device 101 to record a second report when PSCell change succeeds and a trigger condition is met, and the first configuration information includes reporting under the trigger condition. The second report includes information related to the success of the PSCell change. In this scenario, the PSCell change is triggered by the primary access network device, and the PSCell change may be common PSCell change or conditional PSCell change. The primary access network device 102 sends (204) the first configuration information to the terminal 101. The first configuration information is configured for the terminal device before the terminal device performs the PSCell change.

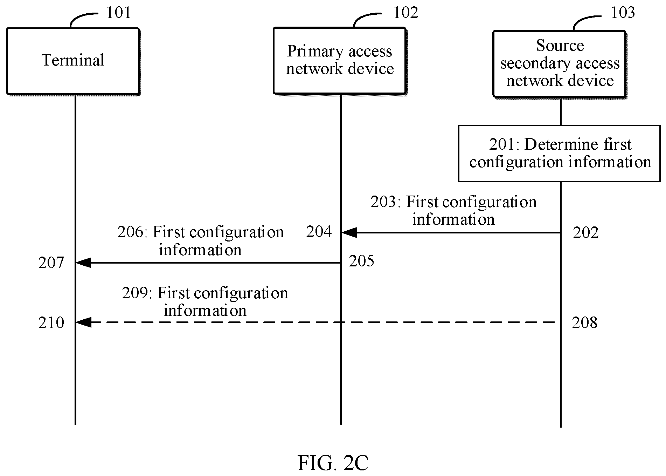

FIG. 2C is a signaling exchange diagram of an example communication process 200C according to a possible implementation of this application. For purposes of description, the communication process 200B is described with reference to the various elements shown in FIG. 1A. However, it should be understood that the communication process 200C may also be performed between an access network device and a terminal device in any other communication scenario.

As shown in FIG. 2C, a source secondary access network device 103 determines (201) first configuration information. The first configuration information is used to configure a terminal device 101 to record reporting of a second report when PSCell change succeeds and a trigger condition is met. The second report includes information related to the success of the PSCell change initiated by a primary access network device. In this scenario, the PSCell change is triggered by the primary access network device, and the PSCell change may be common PSCell change or conditional PSCell change. The source secondary access network device 103 sends (202) the first configuration information 203 to the primary access network device 102, and then the primary access network device 102 sends (205) the first configuration information to the terminal 101. Alternatively, the source secondary access network device 103 directly sends (208) the first configuration information 209 to the terminal device 101.

According to the foregoing technical solution, this application provides a plurality of manners of determining and configuring the trigger condition for the second report for the terminal. That is, configuration information may be determined by the primary access network device, or may be determined by the source secondary access network device. A manner of configuring the configuration information for the terminal may be that the primary access network device delivers the configuration information to the terminal, or may be that the source secondary access network device delivers the configuration information to the terminal.

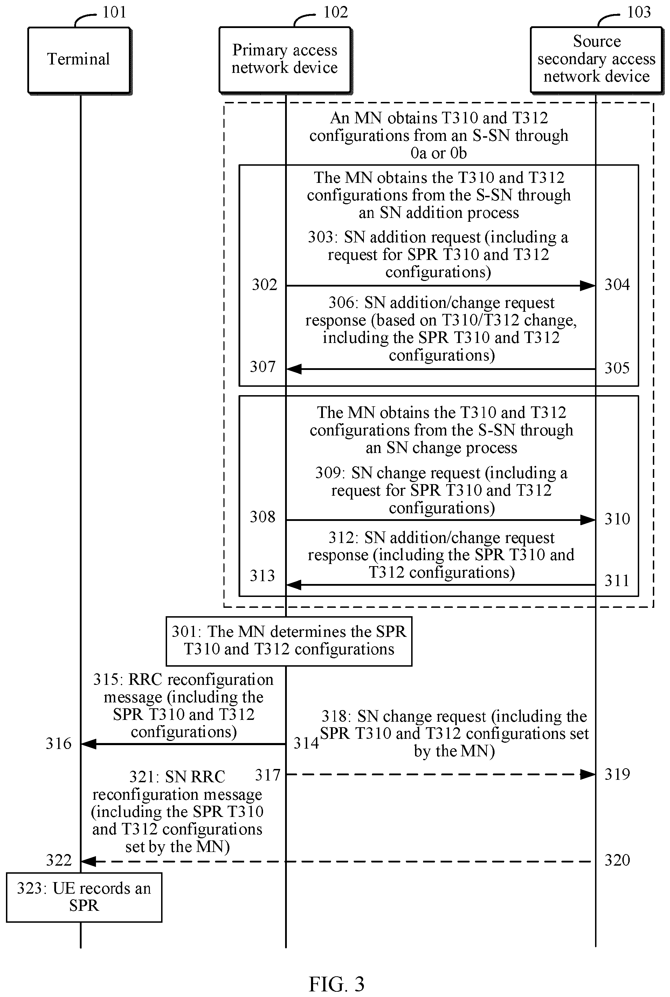

FIG. 3 is a signaling exchange diagram of a detailed example communication process 300 according to another possible implementation of this application. For purposes of description, the communication process 300 is described with reference to the various elements shown in FIG. 1A. However, it should be understood that the communication process 300 may also be performed between an access network device and a terminal device in any other communication scenario.

As shown in FIG. 3, in a procedure in which a primary access network device 102 triggers PSCell change, the PSCell change may be common PSCell change or conditional PSCell change, and the primary access network device 102 determines (301) first configuration information. The first configuration information is used to configure a terminal device 101 to record reporting of a second report when PSCell change succeeds and a trigger condition is met, and the first configuration information includes the trigger condition. The second report includes information related to the success of the PSCell change. Specifically, when configuring MR-DC for the terminal 101, the primary access network device 102 adds 103 as a current secondary access network device of the terminal 101, and then the primary access network device 102 initiates a PSCell change procedure. Compared with a target secondary access network device, the secondary access network device 103 is a source secondary access network device.

The second report may be an SPR, or may be any report that includes the information related to the success of the PSCell change. The following uses the SPR as an example for description.

In some implementations, the first configuration information includes a first trigger condition. Specifically, running duration of a first timer is greater than or equal to a first threshold and is less than configured duration of the first timer, and the first threshold is less than or equal to the configured duration of the first timer. In this case, the first trigger condition is met, and the terminal device records the second report when the PSCell change succeeds. A start time of the first timer is that the terminal device 101 detects a physical layer out-of-synchronization problem with the source secondary access network device 103, and an end time of the first timer is that the terminal device 101 detects recovery of a radio link between the terminal device 101 and the source secondary access network device 103. The first configuration information may further include a second trigger condition. Specifically, running duration of the second timer is greater than or equal to a second threshold and is less than configured duration of the second timer, and the second threshold is less than the configured duration of the second timer. In this case, the second trigger condition is met, and the terminal device records the second report when the PSCell change succeeds. A start time of the second timer is that the terminal device 101 triggers a measurement report, and an end time of the second timer is that the terminal device 101 detects recovery of a radio link between the terminal device 101 and the source secondary access network device 103. Specifically, the first timer may be a timer T310 related to a secondary cell group, and the second timer may be a timer T312 related to the secondary cell group. The first threshold or the second threshold may be a percentage value of configured duration of a timer (for example, T310 or T312), or may be a value less than configured time of a timer.

In some implementations, the primary access network device 102 sends a first request to the source secondary access network device 103, where the first request indicates the source secondary access network device 103 to send second configuration information used to generate the first configuration information, and receives the second configuration information from the source secondary access network device 103. Then, the primary access network device 102 determines the first configuration information based on the second configuration information. The second configuration information includes the configured duration of the first timer and/or the configured duration of the second timer. Specifically, with reference to FIG. 3, to obtain a threshold of T310 and/or a threshold of T312 that are/is configured by the source secondary access network device 103 for the terminal 101, in an SN addition request message 303 sent (302) for adding a secondary access network device, the source secondary access network device 103 is indicated to notify the primary access network device 102 each time the source secondary access network device 103 changes the configured threshold of T310 and/or the configured threshold of T312 for the terminal device. Specifically, each time the source secondary access network device 103 changes the configured threshold of T310 and/or the configured threshold of T312 for the terminal device, the source secondary access network device 103 indicates latest configured thresholds of T310 and T312 or only a changed timer threshold to the primary access network device 102 by using an SN change request message (306). An initial threshold of T310 and/or an initial threshold of T312 that are/is configured by the source secondary access network device 103 for the terminal device are/is indicated to the primary access network device 102 by using an SN addition request response (306) message. In another manner, the source secondary access network device 103 has been used as the current secondary access network device of the terminal 101, and the primary access network device 102 sends (308) an SN change request message 309, where the change request message indicates a request for configured threshold information for T310 and/or T312, and receives an SN change request acknowledgment message 312 sent (311) by the source secondary access network device 103, where the acknowledgment message 312 includes latest configured threshold information for T310 and/or T312.

In some implementations, the primary access network device 102 sends the first configuration information to the terminal device 101. Specifically, with reference to FIG. 3, the primary access network device 102 sends (314) an RRC reconfiguration message (315), where the message includes a trigger threshold of T310 and/or a trigger threshold of T312. In a manner, the trigger threshold of T310 and/or the trigger threshold of T312 are/is indicated, and it indicates that the threshold corresponds to the corresponding timer T310 and/or the corresponding timer T312 that are/is configured by the source secondary access network 103 for the terminal device. In another manner, a separate trigger threshold of T310 and/or a separate trigger threshold of T312 of a secondary cell group are/is set to indicate the trigger threshold of T310 and/or the trigger threshold of T312 for the SPR, to be distinguished from an existing trigger threshold of T310 and/or an existing trigger threshold of T312 of a master cell group, so that the terminal device 101 associates the trigger threshold of T310 and/or the trigger threshold of T312 with the corresponding timer T310 and/or the corresponding timer T312 that are/is configured by the source secondary access network 103 for the terminal device 101. Optionally, the RRC reconfiguration message (315) and an RRC reconfiguration message indicating the PSCell change or the conditional PSCell change to the terminal 101 may be a same RRC reconfiguration message, or may be different RRC reconfiguration messages. For example, an RRC reconfiguration message indicating the trigger threshold of T310 and/or the trigger threshold of T312 for the SPR is first delivered to the terminal 101, and then an RRC reconfiguration message including PSCell change or conditional PSCell change configuration information is delivered.

In some implementations, the primary access network device 102 sends the first configuration information to the terminal device 101 via the source secondary access network device 103. Specifically, with reference to FIG. 3, the primary access network device 102 sends (317) an SN change request message 318 to the source secondary access network device 103, where the change request message indicates the trigger threshold of T310 and/or the trigger threshold of T312 that are/is determined by the primary access network device 102. Then, the source secondary access network device 103 sends (320) an SN RRC reconfiguration message (3321) including the trigger threshold of T310 and/or the trigger threshold of T312 to the terminal 101 through an SRB3.

In some implementations, if the trigger threshold of T310/T312 for the SPR is met in a process in which PSCell change/addition succeeds, the terminal device 101 records the SPR. Optionally, the SPR report includes SPR T310/T312 trigger indication information. For example, True is used to indicate triggering, and False is used to indicate no triggering.

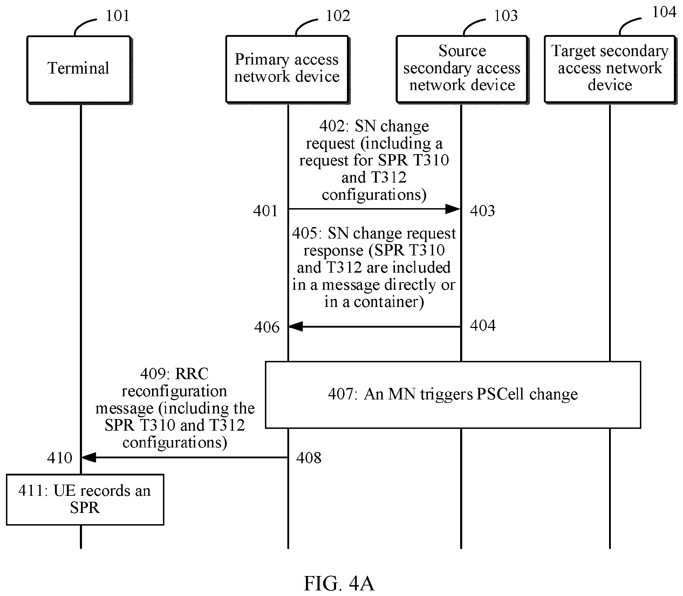

FIG. 4A is a signaling exchange diagram of a detailed example communication process 400A according to still another possible implementation of this application. For purposes of description, the communication process 400A is described with reference to the various elements shown in FIG. 1A. However, it should be understood that the communication process 400A may also be performed between an access network device and a terminal device in any other communication scenario.

As shown in FIG. 4A, a source secondary access network device 103 receives a request from a primary access network device 102, where the request indicates the source secondary access network device 103 to determine first configuration information. The source secondary access network device 103 determines the first configuration information. The first configuration information is used to configure a terminal device 101 to record reporting of a second report when PSCell change succeeds and a trigger condition is met. The second report includes information related to the success of the PSCell change initiated by the primary access network device. The source secondary access network device 103 sends the first configuration information 203 to the primary access network device 102. Then, the primary access network device 102 triggers the PSCell change. Next, the primary access network device 102 sends an RRC reconfiguration message including the first configuration information to the terminal 101.

Specifically, the primary access network device 102 sends (401) an SN change request message 402 to the source secondary access network device 103, where the change request message indicates a configuration request for a trigger threshold of T310 and/or a trigger threshold of T312 to the source secondary access network device 103. Then, the source secondary access network device 103 sends (404) an SN change request response (405) including the trigger threshold of T310 and/or the trigger threshold of T312 to the primary access network device 102. Next, the primary access network device 102 triggers (407) the PSCell change, which may be common PSCell change or conditional PSCell change.

In some implementations, the first configuration information is included in a container of a first message sent by the source secondary access network device 103 to the primary access network device 102. Specifically, the source secondary access network device 103 may alternatively send the trigger threshold of T310 and/or the trigger threshold of T312 to the primary access network device 102 by using an S-NG-RAN node-to-M-NG-RAN node container. Then, the primary access network device 102 includes a container information element to secondary cell group configuration information, and sends the secondary cell group configuration information to the terminal 101.

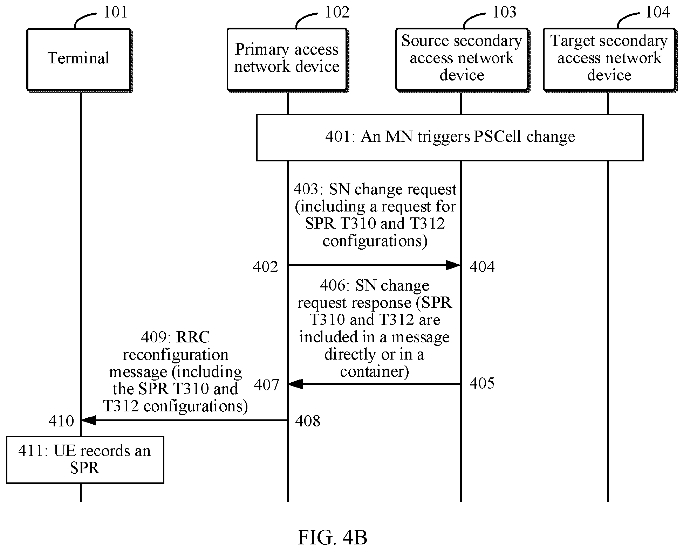

FIG. 4B is a signaling exchange diagram of an example communication process 400B according to still another possible implementation of this application. For purposes of description, the communication process 400B is described with reference to the various elements shown in FIG. 1A. However, it should be understood that the communication process 400B may also be performed between an access network device and a terminal device in any other communication scenario.

As shown in FIG. 4B, a primary access network device 102 triggers PSCell change, which may be common PSCell change or conditional PSCell change. Then, a source secondary access network device 103 receives a request from the primary access network device 102, where the request indicates the source secondary access network device 103 to determine first configuration information. The source secondary access network device 103 determines the first configuration information. The first configuration information is used to configure a terminal device 101 to record reporting of a second report when PSCell change succeeds and a trigger condition is met. The second report includes information related to the success of the PSCell change initiated by the primary access network device. The source secondary access network device 103 sends the first configuration information 203 to the primary access network device 102. Then, the primary access network device 102 triggers the PSCell change. Next, the primary access network device 102 sends an RRC reconfiguration message including the first configuration information to the terminal 101.

Specifically, with reference to FIG. 4B, the primary access network device 102 determines to trigger (401) the PSCell change. The primary access network device 102 sends (402) a request 40) to the source secondary access network device 103, to request the source secondary access network device 103 to configure a trigger threshold of T310 and/or a trigger threshold of T312. The source secondary access network device 103 sends (405) a response 406 including the trigger threshold of T310 and/or the trigger threshold of T312 to the primary access network device 102. Optionally, the source secondary access network device 103 may send the trigger threshold of T310 and/or the trigger threshold of T312 to the primary access network device 102 by using an S-NG-RAN node-to-M-NG-RAN node container information element. The primary access network device 102 sends (408) an RRC reconfiguration message including the trigger threshold of T310 and/or the trigger threshold of T312 to the terminal 101. In a manner, the trigger threshold of T310 and/or the trigger threshold of T312 are/is indicated, and it indicates that the threshold corresponds to the corresponding timer T310 and/or the corresponding timer T312 that are/is configured by the source secondary access network 103 for the terminal device. In another manner, a separate trigger threshold of T310 and/or a separate trigger threshold of T312 of a secondary cell group are/is set to indicate the trigger threshold of T310 and/or the trigger threshold of T312 for the SPR, to be distinguished from an existing trigger threshold of T310 and/or an existing trigger threshold of T312 of a master cell group, so that the terminal device 101 associates the trigger threshold of T310 and/or the trigger threshold of T312 with the corresponding timer T310 and/or the corresponding timer T312 that are/is configured by the source secondary access network 103 for the terminal device 101. Alternatively, the primary access network device 102 sends the trigger threshold of T310/T312 to the terminal 101 by using secondary cell group configuration information.

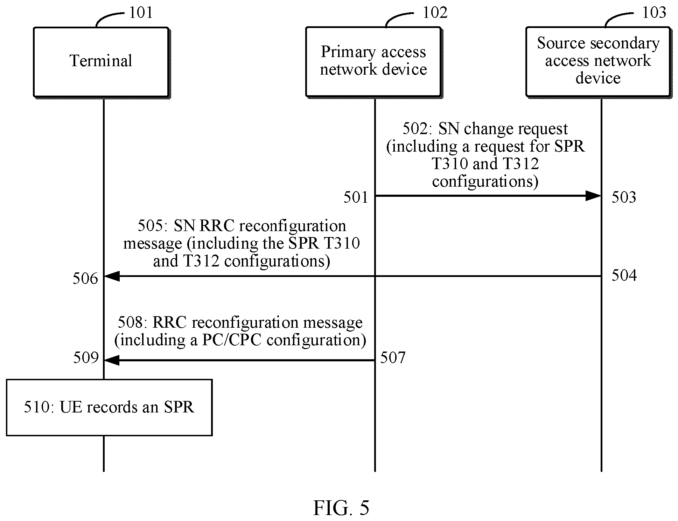

FIG. 5 is a signaling exchange diagram of a detailed example communication process according to yet another possible implementation of this application. For purposes of description, the communication process 500 is described with reference to the various elements shown in FIG. 1A. However, it should be understood that the communication process 500 may also be performed between an access network device and a terminal device in any other communication scenario.

With reference to FIG. 5, a primary access network device 102 sends (501) an SN change request message 502 to a source secondary access network device 103, where the change request message indicates a configuration request for a trigger threshold of T310 and a trigger threshold of T312 to the source secondary access network device. The source secondary access network device 103 sends (504) an SN RRC reconfiguration message (505) including the trigger threshold of T310/T312 to a terminal 101. The primary access network device sends (507) an RRC reconfiguration message (508) including PSCell change or conditional PSCell change configuration information.

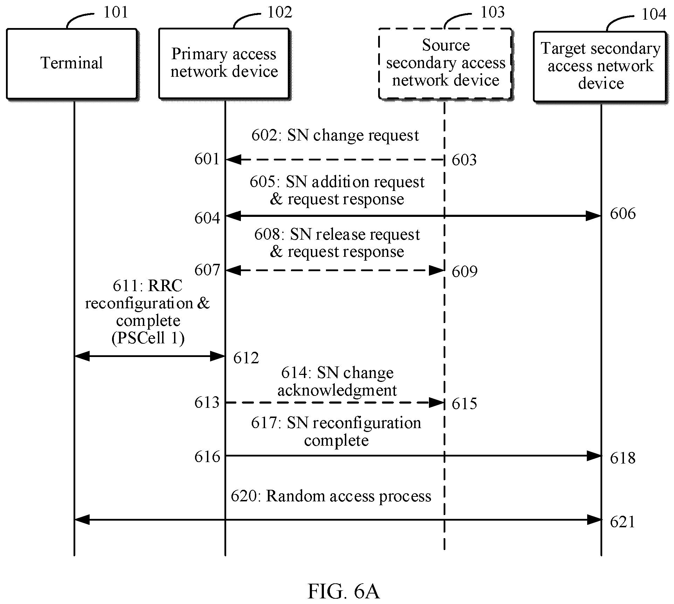

FIG. 6A is a signaling exchange diagram of an example PAC communication process 600A according to a possible implementation of this application. For purposes of description, the communication process 600A is described with reference to the various elements shown in FIG. 1A. However, it should be understood that the communication process 600A may also be performed between an access network device and a terminal device in any other communication scenario.

As shown in FIG. 6A, when no PSCell is configured for a terminal 101, a network side triggers PSCell addition, that is, configures MR-DC for the terminal 101. The PSCell addition can be triggered only by a primary access network device 102. A procedure is described above. When a PSCell is configured for a terminal 101, due to mobility of the terminal 101, a primary access network device 102 or a secondary access network device 103 may trigger PSCell change.

When the primary access network device 102 performs triggering, the primary access network device 102 sends (604) an SN addition request message (605) to a target secondary access network device 104. The target secondary access network device 104 returns an SN addition request acknowledgment message to the primary access network device 102, where the message carries information about a target SCG configured by the target secondary access network device 104 for the terminal. Then, the primary access network device 102 sends (607) an SN release request 608 to the source secondary access network device. The primary access network device 102 sends (612) an RRC message to the terminal 102, where the message includes a command for adding a secondary access network device or an SCG, and the command carries the information about the target SCG.

When the secondary access network device performs triggering, the source secondary access network device 103 sends (603) an SN change requirement message 602 to the primary access network device 102. The primary access network device 102 sends (604) an SN addition request message 605 to a target secondary access network device 104. The primary access network device 102 sends (613) an SN change requirement acknowledgment message 614 to the source secondary access network device 103. A sequence in which the terminal 101 sends (616) an RRC reconfiguration complete message 617 and performs random access to a target PSCell is determined based on implementation of the UE.

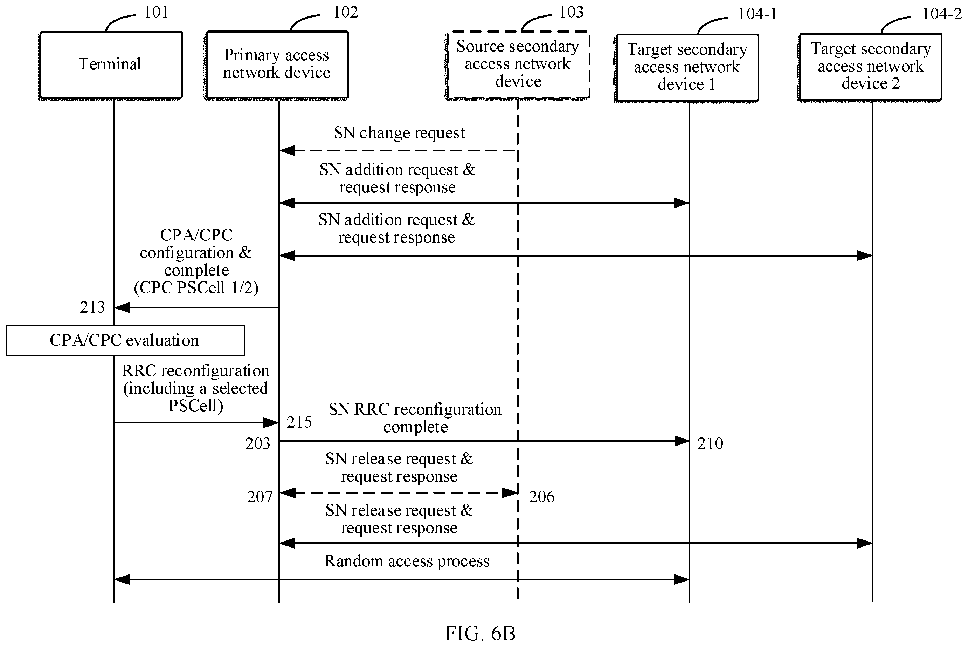

FIG. 6B is a signaling exchange diagram of an example CPAC communication process 600B according to a possible implementation of this application. For purposes of description, the communication process 600B is described with reference to the various elements shown in FIG. 1A. However, it should be understood that the communication process 600B may also be performed between an access network device and a terminal device in any other communication scenario.

When no secondary access network device is configured for a terminal 101, a primary access network device 102 sends an addition request to a plurality of candidate secondary access network devices (104-1, 104-2). If the candidate secondary access network device allows admission, the candidate secondary access network device reserves a radio resource for the terminal 101, and feeds back an acknowledgment to the primary access network device 102. The primary access network device 102 sends a CPA configuration to the terminal device 101, where the message includes radio air interface configurations and execution trigger conditions of all candidate secondary access network devices. The terminal 101 feeds back an RRC reconfiguration complete message to the primary access network device 102. However, the terminal device 101 does not immediately add any candidate PSCell, but continuously determines whether there is a target PSCell meeting an execution trigger condition. When the terminal device 101 detects that one candidate PSCell meets the corresponding execution trigger condition, the terminal 101 feeds back an RRC reconfiguration complete message to the primary access network device 102, and indicates the selected candidate PSCell to the primary access network device 102. A secondary access network device corresponding to the selected candidate PSCell feeds back RRC reconfiguration complete. The primary access network device 102 sends a release message to other candidate secondary access network devices, to notify these base stations to release a reserved resource and buffered data. The terminal device 101 performs random access to the selected candidate PSCell. A sequence in which the terminal 101 sends the RRC reconfiguration complete message and performs random access to the target PSCell is not limited, and is determined based on implementation of the terminal 101.

When a secondary access network device is configured for a terminal device 101, if CPC is triggered by a source secondary access network device 103, the secondary access network device sends a secondary access network device change request for the CPC to a primary access network device, where the request indicates a candidate PSCell cell and a trigger condition. If the CPC is triggered by the primary access network device 102, the primary access network device 102 sends an addition request to a plurality of candidate secondary access network devices (140-1, 140-2), to indicate the CPC. If the candidate secondary access network device allows admission, the candidate secondary access network device reserves a radio resource for the terminal device 101 and feeds back an acknowledgment to the primary access network device. The primary access network device 102 sends a CPA/CPC configuration to the UE, where the message includes radio air interface configurations and execution trigger conditions of all candidate secondary access network devices. The terminal 101 feeds back an RRC reconfiguration complete message to the primary access network device 102. However, the terminal 101 does not immediately add any candidate PSCell, but the terminal 101 continuously determines whether there is a target PSCell meeting an execution trigger condition. When the terminal 101 detects that one candidate PSCell meets the corresponding execution trigger condition, the terminal device 101 feeds back an RRC reconfiguration complete message to the primary access network device 102, and indicates the selected candidate PSCell to the primary access network device 102. The primary access network device 102 feeds back RRC reconfiguration complete to a secondary access network device corresponding to the selected candidate PSCell. The primary access network device sends a release message to the source secondary access network device 103, to notify the source secondary access network device 103 to stop data transmission with the terminal device 101; performs late-term data transfer with the secondary access network device corresponding to the selected candidate PSCell; and sends a release message to other candidate secondary access network devices, to notify these base stations to release a reserved resource and buffered data. The terminal 101 performs random access to the selected candidate PSCell. A sequence in which the terminal 101 sends the RRC reconfiguration complete message and performs random access to the target PSCell is not limited, and is determined based on implementation of the terminal 101.

Because in the foregoing PAC and CPAC processes, the sequence of the RRC reconfiguration complete message and random access to the target PSCell is not limited, a network side cannot sense generation of an SPR report. When the terminal first sends the RRC reconfiguration complete and then performs random access to the target PSCell, the terminal may not be able to indicate SPR availability to the network side in the RRC complete message. This application provides the following solution, so that the network side senses presence of the SPR report. A first trigger condition and/or a second trigger condition for the SPR relate/relates to a secondary access network device currently configured for the UE, that is, a source access network device. Therefore, only in a PSCell change procedure, the network side needs to evaluate whether the first trigger condition and/or the second trigger condition are/is met. A third trigger condition for the SPR relates to a target secondary access network device. In a PSCell addition/change procedure, the network side needs to evaluate whether the third trigger condition for the SPR is met.

In some implementations, in the PSCell change procedure, the PSCell change may be common PSCell change or conditional PSCell change. The terminal device receives a configuration of a first random access channel (RACH) resource and a configuration of a second RACH resource from the primary access network device, to initiate random access to a target primary secondary cell; determines whether a first trigger condition and/or a second trigger condition for a second report are/is met; and when the first trigger condition and/or the second trigger condition for the second report are/is met, sends a random access request on the first RACH resource; or when the first trigger condition and/or the second trigger condition for the second report are/is not met, sends a random access request on the second RACH resource, where the second report includes information related to a success of primary secondary cell PSCell change or addition initiated by the primary access network device, the PSCell change or addition may be common PSCell change or addition, or may be conditional PSCell change or addition, the PSCell addition is triggered by the primary access network device, and the PSCell change may be triggered by the primary access network device or the secondary access network device.

In some implementations, the target secondary access network device allocates a first RACH resource and a second RACH resource to the terminal device; sends a configuration of the first RACH resource and a configuration of the second RACH resource to the primary access network device; and when the target secondary access network device receives random access initiated by the terminal device on the first RACH resource, determines that the terminal device meets a first trigger condition and/or a second trigger condition for a second report; or determines, based on that the terminal device sends random access on the second RACH resource, that the terminal device does not meet a trigger condition for a second report, where the second report includes information related to a success of primary secondary cell PSCell change or addition, the PSCell change or addition may be common PSCell change or addition, or may be conditional PSCell change or addition, the PSCell addition is triggered by the primary access network device, and the PSCell change may be triggered by the primary access network device or the secondary access network device.

Specifically, the foregoing information is used by the network side to sense presence of the second report and request the UE to report the second report, for example, the SPR report. When the secondary access network device or the primary access network device triggers the PSCell change procedure, the secondary access network device or the primary access network device requests the target secondary access network device to allocate two RACH resources (a RACH resource 1 is used for random access when the SPR is triggered, and a RACH resource 2 is used for random access when the SPR is not triggered). If the terminal device 101 detects that trigger conditions of T310 and T312 for the SPR are met (detects whether running time of the timer T310 and/or running time of the timer T312 of a source PSCell meet/meets corresponding trigger thresholds/a corresponding trigger threshold), when the terminal device 101 performs random access to the target PSCell, the RACH resource 1 is used; otherwise, the RACH resource 2 is used. The target PSCell senses, based on a specific used RACH resource, presence of the SPR report triggered by T310/T312 after the UE successfully performs random access.

In some implementations, the first trigger condition includes: Running duration of a first timer is greater than a first threshold, the first threshold is less than configured duration of the first timer, a start time of the first timer is that the terminal device detects a physical layer out-of-synchronization problem with a source secondary access network device, and an end time of the first timer is that the terminal device detects recovery of a radio link between the terminal device and the source secondary access network device; and the second trigger condition includes: Running duration of a second timer is greater than a second threshold, the second threshold is less than configured duration of the second timer, a start time of the second timer is that the terminal device triggers a measurement report, and an end time of the second timer is that the terminal device detects recovery of a radio link between the terminal device and the source secondary access network device.

In some embodiments, in the PSCell addition/change procedure, the PSCell addition/change may be common PSCell addition/change or conditional PSCell addition/change. The target secondary access network device determines running duration of a third timer of the terminal based on a time period from a time point at which the terminal device receives an RRC reconfiguration complete message to a time point at which the terminal device successfully complete random access; and when the running duration of the third timer is greater than a third threshold corresponding to a third trigger condition determined by the target secondary access network device for the terminal, determines that the terminal device generates a second report, where the second report includes information related to a success of the primary secondary cell PSCell addition or change initiated by the primary access network device. When the running duration of the third timer is greater than the third threshold, and the third threshold is less than configured duration of the third timer, a start time of the third timer is that the terminal device receives an RRC reconfiguration message, and an end time of the third timer is duration for successfully completing random access to a target primary secondary access network device.

Specifically, the third timer may correspond to the timer T304 described above. A running start moment of the timer T304 is a condition reconfiguration used and stored by the terminal device 101, and a running end moment is the random access success. Because T304 configuration information of the SPR is determined by the target secondary access network device, when the terminal 101 first sends RRC reconfiguration complete and then performs random access, the target secondary access network device senses a manner of running duration of T304, that is, from a time point at which the RRC reconfiguration complete message sent by the terminal 101 or the RRC reconfiguration complete message indicating a PSCell that meets a trigger condition is received to a time point at which the terminal 101 successfully performs random access to the target secondary access network device, and then determines whether the trigger condition of T304 for the SPR is met. If the trigger condition is met, the target secondary access network device indicates presence of the SPR to the primary access network device 102.

According to the foregoing solution, this application provides a manner in which the network side senses whether the SPR trigger condition is met, so that the network side learns of presence of the SPR and may request the SPR report from the terminal.

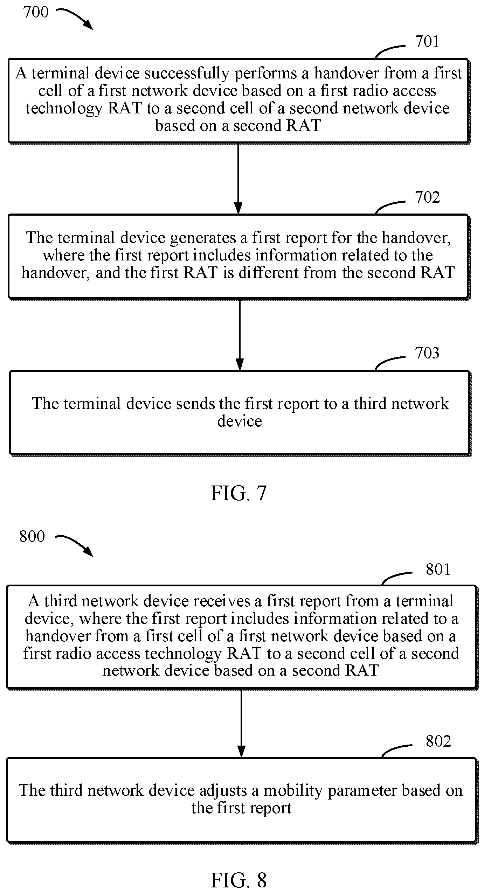

FIG. 7 is a flowchart of a communication method according to a possible implementation of this application.

At 701, a terminal device successfully performs a handover from a first cell of a first access network device based on a first radio access technology RAT to a second cell of a second access network device based on a second RAT.

At 702, the terminal device generates a first report for the handover, where the first report includes information related to the handover, and the first RAT is different from the second RAT.

At 703, the terminal device sends the first report to a third access network device.

In some implementations, when the first cell is a new radio NR cell and the second cell is a long term evolution LTE cell, the first report includes information indicating that the second cell is the LTE cell.

In some implementations, when the first cell is an LTE cell and the second cell is an NR cell, the first report includes information indicating that the first cell is the LTE cell.

In some implementations, the first report further includes at least one of the following: NR cell information of the second cell, where the NR cell information is a predefined value; first indication information, where the first indication information indicates that the first report is related to a handover from the NR cell to the LTE cell; or second indication information, where the second indication information indicates the third access network device to ignore the NR cell information of the second cell in the first report.

In some implementations, the first report further includes at least one of the following: NR cell information of the first cell, where the NR cell information is a predefined value; third indication information, where the third indication information indicates that the first report is related to a handover from the LTE cell to the NR cell; or fourth indication information, where the fourth indication information indicates an access network device to ignore the NR cell information of the first cell in the first report.

In some implementations, the predefined value includes one or more bits with a value of 0.

In some implementations, the predefined value is the same as a value of NR cell information of the first cell.

In some implementations, the predefined value is the same as a value of NR cell information of the second cell.

In some implementations, the third access network device is an access network device to which an NR cell accessed by the terminal device belongs.

FIG. 8 is a flowchart of a communication method according to another possible implementation of this application.

At 801, a third access network device receives a first report from a terminal device, where the first report includes information related to a handover from a first cell of a first access network device based on a first radio access technology RAT to a second cell of a second access network device based on a second RAT.

At 802, the third access network device adjusts a mobility parameter based on the first report.

In some implementations, the method further includes: When the first cell is a new radio NR cell and the second cell is a long term evolution LTE cell, the third access network device ignores NR cell information of the second cell in the first report.

In some implementations, the method further includes: When the first cell is an LTE cell and the second cell is an NR cell, the third access network device ignores NR cell information of the first cell in the first report.

In some implementations, the first report further includes at least one of the following: the NR cell information of the second cell, where the NR cell information is a predefined value; first indication information, where the first indication information indicates that the first report is related to a handover from the NR cell to the LTE cell; or second indication information, where the second indication information indicates the third access network device to ignore the NR cell information of the second cell in the first report.

In some implementations, the first report further includes at least one of the following: the NR cell information of the first cell, where the NR cell information is a predefined value; third indication information, where the third indication information indicates that the first report is related to a handover from the LTE cell to the NR cell; or fourth indication information, where the fourth indication information indicates an access network device to ignore the NR cell information of the first cell in the first report.

In some implementations, the predefined value includes one or more bits with a value of 0.

In some implementations, the predefined value is the same as a value of NR cell information of the first cell.

In some implementations, the predefined value is the same as a value of NR cell information of the second cell.

In some implementations, the third access network device is an access network device to which an NR cell accessed by the terminal device belongs.

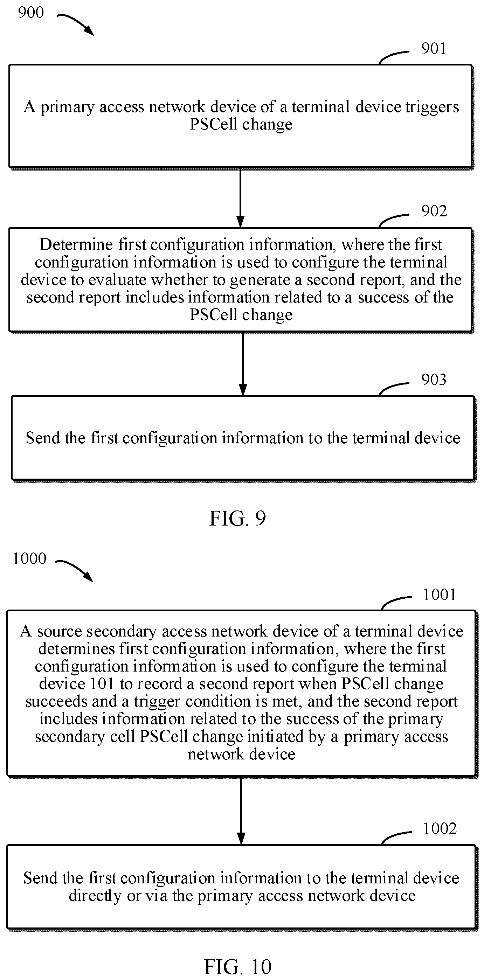

FIG. 9 is a flowchart of a communication method according to still another possible implementation of this application.

At 901, a primary access network device of a terminal device triggers PSCell change.

At 902, first configuration information is determined, where the first configuration information is used to configure the terminal device to report 101 to record a second report when the PSCell change succeeds and a trigger condition is met, and the second report includes information related to the success of the PSCell change.

At 903, the first configuration information is sent to the terminal device, where the first configuration information includes the trigger condition.

In some implementations, the trigger condition includes at least one of the following:
running duration of a first timer is less than or equal to configured duration of the first timer and is greater than or equal to a first threshold, the first threshold is less than or equal to the configured duration of the first timer, a start time of the first timer is that the terminal device detects a physical layer out-of-synchronization problem with a source secondary access network device, and an end time of the first timer is that the terminal device detects recovery of a radio link between the terminal device and the source secondary access network device; or
running duration of a second timer is less than or equal to configured duration of the second timer and is greater than or equal to a second threshold, the second threshold is less than or equal to the configured duration of the second timer, a start time of the second timer is that the terminal device triggers a measurement report, and an end time of the second timer is that the terminal device detects recovery of a radio link between the terminal device and the source secondary access network device.

In some implementations, that first configuration information is determined includes: The primary access network device sends a first request to the source secondary access network device, where the first request indicates the source secondary access network device to send second configuration information used to generate the first configuration information; receives the second configuration information from the source secondary access network device; and determines the first configuration information based on the second configuration information.

In some implementations, the second configuration information includes at least one of the following: the configured duration of the first timer; and the configured duration of the second timer.

In some implementations, the first configuration information further includes a correspondence between the first configuration information and the second configuration information. In one manner, the first configuration information is indicated, and related configuration information, of a secondary cell group, corresponding to the first configuration information is also indicated. In another manner, separate first configuration information of a secondary cell group is set, to be distinguished from first configuration information of an existing master cell group.

In some implementations, the method further includes: The primary access network device sends the first configuration information to the terminal device via the source secondary access network device.

FIG. 10 is a flowchart of a communication method according to yet another possible implementation of this application.

At 1001, a source secondary access network device of a terminal device determines first configuration information, where the first configuration information is used to configure the terminal device 101 to record reporting of a second report when PSCell change succeeds and a trigger condition is met, and the second report includes information related to the success of the primary secondary cell PSCell change initiated by a primary access network device.

At 1002, the first configuration information is sent to the terminal device directly or via the primary access network device.

In some implementations, the first configuration information includes at least one of the following: a first threshold, where the first threshold is less than configured duration of a first timer, a start time of the first timer is that the terminal device detects a physical layer out-of-synchronization problem with the source secondary access network device, and an end time of the first timer is that the terminal device detects recovery of a radio link between the terminal device and the source secondary access network device, and a second threshold, where the second threshold is less than configured duration of a second timer, a start time of the second timer is that the terminal device triggers a measurement report, and an end time of the first timer is that the terminal device detects recovery of a radio link between the terminal device and the source secondary access network device.

In some implementations, the method further includes: The source secondary access network device receives a request from the primary access network device, where the request indicates the source secondary access network device to determine the first configuration information.

In some implementations, the first configuration information is included in a container of a first message sent by the source secondary access network device to the primary access network device.

An embodiment of this application further provides a communication apparatus configured to implement any one of the foregoing methods, for example, provides a communication apparatus, including a unit (or means) configured to implement the steps performed by the terminal or the access network device in any one of the foregoing methods. The communication apparatus may correspond to the terminal or the access network device. In other words, the communication apparatus may be a module, for example, a chip, used for the terminal or the access network device. Alternatively, the communication apparatus is the terminal or the access network device, and the communication apparatus may include a processing unit and a transceiver unit. The access network device may be the third access network device, the primary access network device, the source secondary access network device, or the target secondary access network device in the foregoing methods. It should be understood that division into units of the apparatus is merely logical function division. In an actual implementation, all or some units may be integrated into one physical entity or may be physically separated. For example, the transceiver unit may be divided into a receiving unit and a sending unit. When the communication apparatus is a communication apparatus on an access network side, the transceiver unit may be further divided into a first transceiver unit communicating with the terminal and a second transceiver unit communicating with another access network device such as a base station or a core network device. In addition, in an implementation, the processing unit may be implemented as a processor, and the transceiver unit may be implemented as a transceiver.

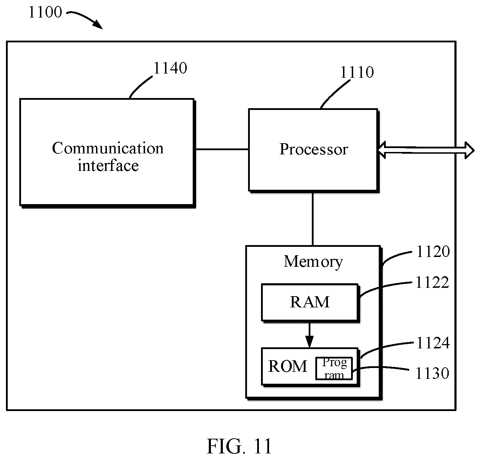

FIG. 11 is a simplified block diagram of a communication apparatus 1100 suitable for implementing a possible implementation of this application. The device 1100 may be configured to implement the terminal device 102 shown in FIG. 1A, or the access network devices 102, 103, and 104. As shown in FIG. 11, the communication apparatus 1100 includes one or more processors (or processing units) 1110, may further include one or more memories 1120 coupled to the processor 1110, and may further include a communication interface 1140 coupled to the processor 1110.

The communication interface 1140 may be configured to communicate with another device or apparatus, for example, send or receive data and/or a signal. The communication interface 1140 may be at least one communication interface for communication. The communication interface may include any interface necessary for communicating with another device. For example, the communication interface may be a transceiver, a circuit, a bus, a module, or another type of communication interface.

The processor 1110 may include but is not limited to at least one of the following: one or more of a general-purpose computer, a dedicated computer, a microcontroller, a digital signal controller (Digital Signal Processor, DSP), or a controller-based multi-core controller architecture. The device 1100 may have a plurality of processors, such as an application-specific integrated circuit chip, which in terms of time, belongs to a clock synchronized with a main processor.

The memory 1120 may include one or more non-volatile memories and one or more volatile memories. An example of the non-volatile memory includes but is not limited to at least one of the following: a read-only memory (Read-Only Memory, ROM) 1124, an erasable programmable read-only memory (Electrically Programmable Read-Only Memory, EPROM), a flash memory, a hard disk, a compact disc (Compact Disc, CD), a digital video disk (Digital Video Disk, DVD), or other magnetic storage and/or optical storage. An example of the volatile memory includes but is not limited to at least one of the following: a random access memory (Random Access Memory, RAM) 1122, or another volatile memory that does not persist during power-off duration.

A computer program 1730 includes computer-executable instructions executed by the associated processor 1710. The program 1130 may be stored in the ROM 1120. The processor 1110 may perform any proper action and processing by loading the program 1730 into the RAM 1120.

A possible implementation of this application may be implemented by using the program 1130, so that the communication apparatus 1100 may perform any process discussed with reference to FIG. 2A, FIG. 2B, FIG. 2C, FIG. 3, FIG. 4A, FIG. 4B, FIG. 5, FIG. 6A, FIG. 6B, and FIG. 7 to FIG. 10. A possible implementation of this application may alternatively be implemented by hardware or a combination of software and hardware.

In some implementations, the program 1130 may be tangibly included in a computer-readable medium, and the computer-readable medium may be included in the device 1100 (for example, in the memory 1120) or another storage device that can be accessed by the device 1100. The program 1130 may be loaded from the computer-readable medium to the RAM 1122 for execution. The computer-readable medium may include any type of tangible non-volatile memory, for example, a ROM, an EPROM, a flash memory, a hard disk, a CD, a DVD, or the like.

It should be noted that the foregoing implementations are some implementations provided in this application, and are merely intended to describe the technical solutions of this application more clearly, but do not constitute any limitation on another implementation of this application. In another implementation, more or fewer procedures or steps, more or fewer components, more or fewer service functions, different scheduling policies, and the like may be further included. This is not limited herein. A person of ordinary skill in the art may learn that with evolution of a network architecture and emergence of a new service scenario, the technical solutions provided in this application are also applicable to resolving a similar technical problem.

An embodiment of this application further provides a chip. The chip may include an input interface, an output interface, and a processing circuit. In this embodiment of this disclosure, the input interface and the output interface may complete signaling or data exchange, and the processing circuit may complete generation and processing of signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this application further provides a communication system, including the access network device described in the foregoing method embodiments, for example, including a primary access network device, a source secondary access network device, and a target access network device. Optionally, the communication system further includes the terminal device in the foregoing method embodiments.

An embodiment of this application further provides a processor, configured to be coupled to a memory. The memory stores instructions. When the processor runs the instructions, the processor is enabled to perform the method and the function in any one of the foregoing embodiments.

An embodiment of this application further provides a computer-readable storage medium. The computer-readable storage medium stores computer instructions or program code. When a processor runs the instructions or the program code, the processor is enabled to perform the method and the function in any one of the foregoing embodiments. The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. The computer-readable storage medium may be any usable medium accessible to the computer, or a data storage device, for example, a server or a data center, integrating one or more usable media. More detailed examples of the computer-readable storage medium include an electrical connection with one or more wires, a magnetic medium (for example, a magnetic disk, a floppy disk, a hard disk, a magnetic tape, or a magnetic storage device), an optical medium (for example, an optical storage device or a DVD), a semiconductor medium (for example, a solid state drive), a random access memory (RAM), a read-only memory (ROM), an erasable programmable read-only memory (EPROM or flash memory), or any suitable combination thereof.

All or some of the foregoing embodiments may be implemented by using software, hardware, firmware, or any combination thereof. When software is used to implement embodiments, all or some of embodiments may be implemented in a form of a computer program product. An embodiment of this application further provides at least one computer program product that is tangibly stored on a non-transitory computer-readable storage medium. The computer program product includes one or more computer-executable instructions, for example, instructions included in a program module, and the instructions are executed in a device on a target real or virtual processor, to perform the process, the method, and the function in any one of the foregoing embodiments. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner.

According to the methods provided in embodiments of this application, this application further provides a computer program product. The computer program product includes computer program code. When the computer program code is run on a computer, the computer is enabled to perform a process, a method, and a function in the foregoing embodiments. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be located in a local storage medium and a remote storage medium.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

It should be noted that although the foregoing describes embodiments of this application with reference to the accompanying drawings, the foregoing embodiments are not independent of each other, and may also be combined to obtain another embodiment. Division of manners, cases, categories, and embodiments in embodiments of this application is merely for ease of description, and shall not constitute a special limitation. Various manners, categories, cases, and features in embodiments may be combined with each other provided that they comply with logic. The implementations of this application may be randomly combined, to achieve different technical effects. Various combinations are not listed in embodiments of this application.

In addition, although the operations of the methods in this disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should be further noted that, the features and functions of two or more apparatuses according to this disclosure may be specific in one apparatus. Instead, features and functions of one apparatus described above may be further specific in a plurality of apparatuses.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

## Claims

1. A communication method, used for a terminal device, wherein the method comprises:
successfully performing a handover from a first cell of a first access network device based on a first radio access technology RAT to a second cell of a second access network device based on a second RAT;
generating a first report for the handover, wherein the first report comprises information related to the handover, and the first RAT is different from the second RAT; and
sending the first report to a third access network device.

2. The method according to claim 1, further comprising:
when the first cell is a new radio NR cell and the second cell is a long term evolution LTE cell, the first report comprises information indicating that the second cell is the LTE cell.

3. The method according to claim 1, further comprising:
when the first cell is an LTE cell and the second cell is an NR cell, the first report comprises information indicating that the first cell is the LTE cell.

4. A communication method, used for a third access network device, wherein the method comprises:
receiving a first report from a terminal device, wherein the first report comprises information related to a handover from a first cell of a first access network device based on a first radio access technology RAT to a second cell of a second access network device based on a second RAT; and
adjusting, by the third access network device, a mobility parameter based on the first report.

5. The method according to claim 4, further comprising:
when the first cell is a new radio NR cell and the second cell is a long term evolution LTE cell, ignoring, by the third access network device, NR cell information of the second cell in the first report.

6. The method according to claim 4, further comprising:
when the first cell is an LTE cell and the second cell is an NR cell, ignoring, by the third access network device, NR cell information of the first cell in the first report.

7. The method according to claim 2 or 5, wherein the first report further comprises at least one of the following:
the NR cell information of the second cell, wherein the NR cell information is a predefined value;
first indication information, wherein the first indication information indicates that the first report is related to a handover from the NR cell to the LTE cell; or
second indication information, wherein the second indication information indicates the third access network device to ignore the NR cell information of the second cell in the first report.

8. The method according to claim 3 or 6, wherein the first report further comprises at least one of the following:
the NR cell information of the first cell, wherein the NR cell information is a predefined value;
third indication information, wherein the third indication information indicates that the first report is related to a handover from the LTE cell to the NR cell; or
fourth indication information, wherein the fourth indication information indicates an access network device to ignore the NR cell information of the first cell in the first report.

9. The method according to claim 7 or 8, wherein the predefined value comprises one or more bits with a value of 0.

10. The method according to claim 7, wherein the predefined value is the same as a value of NR cell information of the first cell.

11. The method according to claim 8, wherein the predefined value is the same as a value of NR cell information of the second cell.

12. The method according to any one of claims 1 to 11, wherein the third access network device is an access network device to which an NR cell accessed by the terminal device belongs.

13. A communication method, used for a primary access network device of a terminal device, wherein the method comprises:
triggering primary secondary cell PSCell change;
determining first configuration information, wherein the first configuration information is used to configure to record the second report when the PSCell change succeeds and the trigger condition is met, the first configuration information comprises the trigger condition, and the second report comprises information related to the success of the PSCell change; and
sending the first configuration information to the terminal device.

14. The method according to claim 13, wherein the trigger condition comprises at least one of the following:
running duration of a first timer is less than or equal to configured duration of the first timer and is greater than or equal to a first threshold, the first threshold is less than or equal to the configured duration of the first timer, a start time of the first timer is that the terminal device detects a physical layer out-of-synchronization problem with a source secondary access network device, and an end time of the first timer is that the terminal device detects recovery of a radio link between the terminal device and the source secondary access network device; or
running duration of a second timer is less than or equal to configured duration of the second timer and is greater than or equal to a second threshold, the second threshold is less than or equal to the configured duration of the second timer, a start time of the second timer is that the terminal device triggers a measurement report, and an end time of the second timer is that the terminal device detects recovery of a radio link between the terminal device and the source secondary access network device.

15. The method according to claim 13 or 14, wherein the determining first configuration information comprises:
sending, by the primary access network device, a first request to the source secondary access network device, wherein the first request indicates the source secondary access network device to send second configuration information used to generate the first configuration information;
receiving the second configuration information from the source secondary access network device; and
determining the first configuration information based on the second configuration information.

16. The method according to claim 15, wherein the second configuration information comprises at least one of the following:
the configured duration of the first timer; and
the configured duration of the second timer.

17. The method according to any one of claims 14 to 16, wherein the first configuration information further comprises a correspondence between the first configuration information and the second configuration information.

18. The method according to any one of claims 14 to 17, wherein the sending the first configuration information to the terminal device comprises: sending the first configuration information to the terminal device via the source secondary access network device.

19. A communication method, used for a source secondary access network device of a terminal device, wherein the method comprises:
determining first configuration information, wherein the first configuration information is used to configure to record the second report when primary secondary cell PSCell change succeeds and the trigger condition is met, the first configuration information comprises the trigger condition, and the second report comprises information related to the success of the PSCell change initiated by a primary access network device; and
sending the first configuration information to the terminal device directly or via the primary access network device.

20. The method according to claim 19, wherein the trigger condition comprises at least one of the following:
running duration of a first timer is less than or equal to configured duration of the first timer and is greater than or equal to a first threshold, the first threshold is less than or equal to the configured duration of the first timer, a start time of the first timer is that the terminal device detects a physical layer out-of-synchronization problem with a source secondary access network device, and an end time of the first timer is that the terminal device detects recovery of a radio link between the terminal device and the source secondary access network device; or
running duration of a second timer is less than or equal to configured duration of the second timer and is greater than or equal to a second threshold, the second threshold is less than or equal to the configured duration of the second timer, a start time of the second timer is that the terminal device triggers a measurement report, and an end time of the second timer is that the terminal device detects recovery of a radio link between the terminal device and the source secondary access network device.

21. The method according to claim 19 or 20, further comprising:
receiving, by the source secondary access network device, a request from the primary access network device, wherein the request indicates the source secondary access network device to determine the first configuration information.

22. The method according to any one of claims 19 to 21, wherein the first configuration information is comprised in a container of a first message sent by the source secondary access network device to the primary access network device.

23. A communication apparatus, comprising:
at least one processor; and
at least one memory, wherein the at least one memory is coupled to the at least one processor and stores instructions executed by the at least one processor, and when the instructions are executed by the at least one processor, the communication apparatus is enabled to implement the method according to any one of claims 1 to 22.

24. A communication apparatus, comprising a unit or module configured to perform the method according to any one of claims 1 to 22.

25. A computer-readable storage medium, wherein the computer-readable storage medium stores instructions, and when the instructions are executed by an electronic device, the electronic device is enabled to perform the method according to any one of claims 1 to 22.

26. A computer program product, wherein the computer program product comprises instructions, and when the instructions are executed by an electronic device, the electronic device is enabled to perform the method according to any one of claims 1 to 22.
